(19) **Europäisches Patentamt / European Patent Office / Office européen des brevets**

(11) **EP 4 215 282 A1**

(12) **EUROPÄISCHE PATENTANMELDUNG**

(43) Veröffentlichungstag:
26.07.2023 Patentblatt 2023/30

(21) Anmeldenummer: 23160613.8

(22) Anmeldetag: **04.05.2020**

(51) Internationale Patentklassifikation (IPC):
**B05D 3/12** (2006.01)  **B05D 1/42** (2006.01)
**B05D 5/02** (2006.01)  **B05D 3/04** (2006.01)
**A46B 5/06** (2006.01)  **B24B 7/18** (2006.01)
**B24B 29/00** (2006.01)  **B44C 1/22** (2006.01)
**B44D 5/00** (2006.01)  **B05D 1/32** (2006.01)
**B08B 3/02** (2006.01)  **B08B 5/02** (2006.01)
B05D 3/00 (2006.01)  B24C 1/04 (2006.01)
B24C 3/08 (2006.01)  B24C 9/00 (2006.01)
B05D 3/06 (2006.01)  B08B 1/00 (2006.01)
B08B 1/02 (2006.01)  B08B 7/00 (2006.01)
B08B 15/04 (2006.01)

(52) Gemeinsame Patentklassifikation (CPC):
**B05D 3/12; A46B 5/06; A46B 13/001; B05D 3/007;
B05D 3/04; B05D 3/067; B05D 5/02; B08B 3/022;
B08B 5/023; B24B 7/18; B24B 29/005; B44C 1/22;
B44D 5/00;** B08B 1/008; B08B 1/02;        (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **03.05.2019   DE 102019206431**

(62) Dokumentnummer(n) der früheren Anmeldung(en)
nach Art. 76 EPÜ:
**20724447.6 / 3 752 296**

(71) Anmelder: **Hymmen GmbH Maschinen- und
Anlagenbau
33613 Bielefeld (DE)**

(72) Erfinder: **PANKOKE, René
33739 Bielefeld (DE)**

(74) Vertreter: **Prüfer & Partner mbB
Patentanwälte · Rechtsanwälte
Sohnckestraße 12
81479 München (DE)**

Bemerkungen:
Diese Anmeldung ist am 07-03-2023 als
Teilanmeldung zu der unter INID-Code 62 erwähnten
Anmeldung eingereicht worden.

(54) **VERFAHREN ZUM HERSTELLEN EINER STRUKTUR AUF EINER OBERFLÄCHE**

(57) Es wird ein Verfahren zum Herstellen einer Struktur auf einer Oberfläche eines Werkstückes (1) mit folgenden Schritten offenbart:
- Aufbringen einer flüssigen Grundschicht (2) auf die Oberfläche des Werkstückes (1);
- Aufspritzen mindestens eines Tröpfchens (3) in die noch nicht erstarrte Grundschicht (2), wobei das mindestens eine Tröpfchen (3) in die Grundschicht (2) zumindest teilweise, vorzugsweise vollständig, eindringt;
- Fixieren der Grundschicht (2);
- mindestens teilweises Entfernen des mindestens einen Tröpfchens (3).
Ferner wird eine Vorrichtung zur Durchführung der Verfahren offenbart.

Figur 1

EP 4 215 282 A1

(52) Gemeinsame Patentklassifikation (CPC): (Forts.)
B08B 7/0057; B08B 15/04; B24C 1/04;
B24C 3/08; B24C 9/00

**Beschreibung**

Die vorliegende Erfindung betrifft ein Verfahren zum Herstellen einer Struktur auf einer Oberfläche eines flächigen Werkstückes sowie eine Vorrichtung zur Durchführung des Verfahrens.

Eine dekorativ beschichtete Holzwerkstoffplatte ist Stand der Technik und wird in vielfältigen Anwendungsfällen, z.B. zum Herstellen von Möbeln, von Fußbodenlaminaten und von Wand-, Decken- oder Außenpaneelen angewendet. Ein typisches Beispiel für diese Holzwerkstoffplatten ist eine Spanplatte, welche mit einem dekorativ bedruckten Papier beschichtet ist. Alternativ dazu gibt es auch andere Arten von Faserplatten, z.B. MDF (mitteldichte Faserplatten) oder HDF (hochdichte Faserplatten), wie auch Zementfaserplatten und zementgebundene Spanplatten, die z.B. in Stärken von ca. 3 bis 50 mm für verschiedene Anwendungsfälle verwendet werden.

In den meisten dieser Anwendungsfälle ist es wünschenswert, neben einer dekorativen Beschichtung, wie z.B. einer Holznachbildung oder einer Fliesennachbildung für steinartig anmutenden Laminatfußboden, auch eine Struktur in der Oberfläche zu erhalten.

Nach dem Stand der Technik wird dies z.B. in einem Melaminbeschichtungsverfahren mittels einer Prägematrize hergestellt. Dabei wird beispielsweise ein mit einer Holzoptik bedrucktes Papier mit einem Melaminharz imprägniert, angetrocknet und dann in einer Heizpresse mit einem Prägeblech auf eine Spanplatte verpresst. Das Ergebnis ist eine 12 mm dicke Spanplatte, welche mit einer Buchennachbildungsoptik beschichtet ist. Auf der Oberfläche mit der Buchennachbildungsoptik ergeben sich dann durch das Prägeblech Strukturen mit einer Tiefe von üblicherweise 20 $\mu$m bis zu 150 $\mu$m oder 200 $\mu$m.

Diese Strukturen werden entweder holzähnlich unabhängig von der tatsächlich gedruckten Holzart als sogenannte "all-over" Struktur hergestellt. In entsprechend teureren Verfahren mit hochwertiger anmutenden Produkten wird auch eine sogenannte Synchronpore verwendet, bei der das Prägeblech eine Struktur hat, welche synchron zu der gedruckten Holzoptik angewendet wird. In diesem Falle ist beispielsweise ein gedrucktes Astloch auch tatsächlich fühlbar tiefer als der daneben etwas höher stehende Rest der gedruckten Holzoptik.

Neben diesem sogenannten Melaminverpressungsverfahren gibt es weitere Verfahren zur Beschichtung von Holzwerkstoffplatten. In einem weiteren bekannten Verfahren wird z.B. eine Holzwerkstoffplatte lackiert, bedruckt und dann mit einer transparenten Decklackschicht versehen. Um auch hier eine entsprechende Oberflächenstruktur zu erhalten, gibt es die Möglichkeit, mit einer strukturierten Decklackwalze eine Struktur aufzubringen. Ein solches Verfahren ist zum Beispiel in der DE 10 2007 019 871 A1 beschrieben.

Die DE 10 2009 044 802 A1 offenbart ein Strukturierungsverfahren, bei dem mittels Lacktröpfchen, die auf die Oberfläche eines Werkstückes abgegeben werden, eine Oberflächenstruktur aufgebaut wird. Eine Struktur wird dabei durch eine Hüllkurve die durch die Oberfläche der gesamten Tröpfchen gegeben ist, erzeugt.

Bereits bekannt ist ferner ein Verfahren zum Herstellen einer Struktur auf einem flächigen Werkstück, das in der DE 10 2015 110 236 A1 beschrieben ist. Das Werkstück wird dabei zunächst mit einer flüssigen Grundschicht beschichtet. Anschließend wird mittels Tröpfchen, die beispielsweise mit einem Tintenstrahldrucker auf die Grundschicht gespritzt werden, eine Struktur in die Grundschicht eingebracht, indem die Tröpfchen die Grundschicht beim Auftreffen auf diese verdrängen. Dadurch werden Vertiefungen in die Struktur eingebracht, die dann in ihrer Gesamtheit eine Struktur in der flüssigen Grundschicht ausbilden. Anschließend wird die Grundschicht mit einem geeigneten Verfahren fixiert, so dass die Struktur darin ebenfalls fixiert wird. Damit ist das Werkstück mit einer Struktur versehen.

Aus der DE 10 2017 113 035 A1 ist ein weiteres Verfahren zur Herstellung einer dekorativen Oberfläche bekannt. Die dabei geschaffene Oberfläche wird mit unterschiedlichen Glanzgraden ausgebildet. Im Wesentlichen wird hier auf eine erste Lackschicht, mit der eine Oberfläche eines Werkstücks beschichtet wurde, eine zweite Lackschicht aufgebracht, wobei die zweite Lackschicht in Tröpfchenform aufgebracht wird und sich nach der Aushärtung in ihrem Glanzgrad von der ersten Lackschicht unterscheidet. Eine spezielle Ausprägung des hier offenbarten Verfahrens beinhaltet ebenfalls Schritte, in denen eine Strukturierung der Oberfläche durchgeführt wird.

In dem bisherigen Stand der Technik werden bei einer Grundschicht mit einer Schichtstärke von 100 $\mu$m mit Hilfe einer digitalen Strukturierung üblicherweise Strukturtiefen von 20 bis 100 $\mu$m erreicht. In einem sicheren, industriellen Verfahren werden üblicherweise Strukturtiefen von lediglich maximal 80 $\mu$m erreicht, da sich gezeigt hat, dass eine aufgetragene flüssige Grundschicht von den auf die Oberfläche abgegebenen Tröpfchen (abhängig vom Material der Tröpfchen) nicht immer bis auf die darunter liegende feste Schicht, also das eigentliche Werkstück, verdrängt wird. Stattdessen erfolgt lediglich eine Verdrängung bis in eine Tiefe von ca. 70 bis 80% der Schichtstärke der flüssigen Grundschicht. Dies entspricht somit lediglich 70 bis 80 $\mu$m.

Außerdem sind nach dem Stand der Technik die Ränder der digital eingebrachten Struktur, bzw. der eingebrachten Vertiefungen, eher abgerundet, und nicht wie gewünscht, sehr scharfkantig. Gerade bei der Nachbildung einer natürlichen Holzstruktur oder Holzporenoptik sind sehr scharfkantige Poren erwünscht, bei denen der gemessene Tiefenunterschied zwischen der höchsten und der tiefsten Stelle in der Oberfläche, also in einer Richtung senkrecht zur Oberfläche des Werkstücks, über eine sehr kurze räumliche Ausdehnung, also parallel zur Oberfläche des Werkstücks erfolgt. Bei den nach dem Stand der Technik hergestellten Produkten stellt sich dieser Tiefenunterschied von z.B. 100 μm über eine räumliche Ausdehnung von z.B. 40 bis 60 μm ein, während bei einer scharfkantigen Pore dieser Tiefenunterschied innerhalb einer räumlichen Ausdehnung von eher 10 bis 20 μm erreicht sein sollte.

Vor diesem Hintergrund ist es Aufgabe der vorliegenden Erfindung, die oben genannten Probleme zu lösen und insbesondere eine Möglichkeit zu schaffen, im Vergleich zu bekannten Verfahren schärfere Strukturen einzubringen.

Diese Aufgabe wird durch die Gegenstände der unabhängigen Ansprüche gelöst. Vorteilhafte Weiterbildungen sind Gegenstand der Unteransprüche.

Zur Lösung der Aufgabe wird vorgeschlagen, dass die aufgespritzten Tröpfchen wie eine Art "Platzhalter" bis zur Härtung der flüssigen Grundschicht in dieser verbleiben, und nach der erfolgten Härtung mittels unterschiedlicher Methoden wieder entfernt werden. Dadurch wird verhindert, dass eine durch die aufgespritzten Tröpfchen geschaffene Struktur vor dem Aushärten der flüssigen Grundschicht wieder "zerfließt" oder die Scharfkantigkeit der Pore durch ein Verfließen der Grundschicht vor der Härtung abnimmt.

Erfindungsgemäß ist ein Verfahren zum Herstellen einer Struktur auf einer Oberfläche eines Werkstückes mit folgenden Schritten vorgesehen:

- Aufbringen einer flüssigen Grundschicht auf eine Oberfläche des Werkstückes;
- Aufspritzen mindestens eines Tröpfchens in die noch nicht erstarrte Grundschicht, wobei das mindestens eine Tröpfchen in die flüssige Grundschicht zumindest teilweise, vorzugsweise vollständig, eindringt;
- Fixieren der Grundschicht;
- mindestens teilweises Entfernen des mindestens einen Tröpfchens.

Vorzugsweise ist ein Verfahren zum Herstellen einer Struktur auf einer Oberfläche eines Werkstückes mit folgenden Schritten vorgesehen:

- Aufspritzen mindestens eines Tröpfchens auf die Oberfläche des Werkstückes;
- Aufbringen einer flüssigen Grundschicht auf die Oberfläche des Werkstückes, wobei die Grundschicht das mindestens eine Tröpfchen umfließt, vorzugsweise zumindest teilweise bedeckt;
- Fixieren der Grundschicht;
- mindestens teilweises Entfernen des mindestens einen Tröpfchens.

Beide Verfahren können vorzugsweise auch in Kombination ausgeführt werden, so dass erfindungsgemäß auch ein Verfahren mit folgenden Schritten vorgesehen ist:

- Aufspritzen mindestens eines Tröpfchens auf die Oberfläche des Werkstückes;
- Aufbringen einer flüssigen Grundschicht auf die Oberfläche des Werkstückes, wobei die Grundschicht das mindestens eine Tröpfchen umfließt, vorzugsweise zumindest teilweise bedeckt;
- Aufspritzen mindestens eines weiteren Tröpfchens in die noch nicht erstarrte Grundschicht, wobei das mindestens eine weitere Tröpfchen in die flüssige Grundschicht zumindest teilweise, vorzugsweise vollständig, eindringt;
- Fixieren der Grundschicht;
- mindestens teilweises Entfernen des mindestens einen Tröpfchens und/oder des mindestens einen weiteren Tröpfchens.

Das Aufspritzen der Tröpfchen auf das Werkstück und/oder auf die flüssige Grundschicht erfolgt vorzugsweise nach einer digitalen Vorlage, die vorzugsweise mit einem Dekorbild abgestimmt ist. Das Dekorbild befindet sich bevorzugt auf dem Werkstück, wobei es von der flüssigen Grundschicht und/oder den Tröpfchen bedeckt wird. Bevorzugt sind dann die Grundschicht und/oder die Tröpfchen so ausgebildet, dass sie zumindest teilweise transparent sind, wenn sie fixiert wurden, damit das Dekorbild sichtbar ist. Auf diese Weise wird erreicht, dass eine möglichst synchrone Anordnung von Dekorbild und Struktur erreicht wird. Beispielsweise kann eine Struktur eines Astlochs sehr gut an eine Abbildung eines Astlochs angepasst werden. Alternativ oder zusätzlich kann ein Dekorbild auch auf der fixierten Grundschicht angeordnet sein.

Vorzugsweise erstarrt das mindestens eine Tröpfchen bei Kontakt mit dem Werkstück und/oder der Grundschicht beziehungsweise es nimmt bevorzugt einen festen Aggregatszustand an. Das mindestens eine Tröpfchen kann jedoch auch in einem separaten Schritt oder zusammen mit der Grundschicht fixiert werden.

Das Fixieren der Grundschicht oder auch der Tröpfchen kann vorzugsweise mit deren Härtung gleichgesetzt werden.

Vorzugsweise weisen die Grundschicht und/oder das mindestens eine Tröpfchen ferner ein härtbares Material auf, welches besonders bevorzugt durch UV-Strahlung und/oder durch Trocknung gehärtet bzw. fixiert werden kann.

Besonders bevorzugt bestehen Grundschicht und das mindestens eine Tröpfchen aus unterschiedlichen Materialien, dahingehend, dass die Grundschicht bei einem Härtungsvorgang stärker aushärtet als das mindestens eine Tröpfchen.

Vorzugsweise wird durch das Aufspritzen des mindestens einen Tröpfchens in die zuvor aufgetragene, flüssige Grundschicht mindestens eine Vertiefung eingebracht, wobei die mindestens eine Vertiefung vorzugsweise durch das mindestens eine Tröpfchen vollständig ausgefüllt wird. Die Geometrie der mindestens einen Vertiefung kann durch Variation des Impulses bzw. der Geschwindigkeit des mindestens einen Tröpfchens und/oder durch Variation des Abgabevolumens bzw. der Masse des mindestens einen Tröpfchens beeinflusst werden. Alternativ oder zusätzlich ist denkbar, eine Vertiefung durch Aufspritzen mehrerer Tröpfchen an einem räumlichen Ort (übereinander) in ihrer Tiefe bzw. in ihrem Volumen gegenüber einer Vertiefung die nur von einem Tröpfchen gebildet wurde, zu vergrößern.

Wird das mindestens eine Tröpfchen vor dem Aufbringen der Grundschicht auf die Oberfläche des Werkstücks aufgespritzt, so wird eine Vertiefung in der Grundschicht dadurch gebildet, dass das mindestens eine Tröpfchen einen Raum auf dem Werkstück, bzw. der Oberfläche des Werkstücks, besetzt, der nicht von dem Material der danach aufgebrachten Grundschicht eingenommen werden kann. Wird das mindestens eine Tröpfchen nach Fixierung der Grundschicht zumindest teilweise entfernt, so verbleibt eine Aussparung bzw. eben eine Vertiefung in der Grundschicht.

Die Struktur in der Grundschicht wird vorzugsweise durch die mindestens eine Vertiefung gebildet. Holz- oder Fliesendekore oder auch andere dekorative Strukturen können beispielsweise durch Anordnung mehrerer Vertiefungen bzw. auch durch die Verbindung mehrerer Vertiefungen gebildet werden.

Vorzugsweise verändert sich die Schichtstärke der Grundschicht an der Stelle, an der das mindestens eine Tröpfchen aufgespritzt wurde.

Vorzugsweise werden mehrere Tröpfchen am selben räumlichen Ort in der flüssigen Grundschicht und/oder auf dem Werkstück übereinander platziert, so dass sich vor dem Aufbringen und/oder vor dem Fixieren der Grundschicht ein zusammengesetztes Tröpfchen ergibt. Das zusammengesetzte Tröpfchen weist vorzugsweise eine Höhe h auf die sich wie folgt berechnen lässt:

$$h = n \times D$$

n ist dabei die Anzahl der übereinander platzierten Tröpfchen und D der Durchmesser eines dieser Tröpfchen. Hier wurde vorausgesetzt, dass es sich um gleich große Tröpfchen handelt, es ist jedoch auch denkbar, dass Tröpfchen unterschiedlicher Größe in dieser Art und Weise kombiniert werden.

Vorzugsweise erfolgt vor dem Aufspritzen des mindestens einen Tröpfchens ein weiterer Bearbeitungsschritt, in dem eine Verfestigung der Grundschicht insoweit erfolgt, dass die Grundschicht eine höhere Viskosität als bei ihrem Auftrag auf das Werkstück aufweist, jedoch noch nicht erstarrt ist. Dies kann beispielsweise durch Trocknung oder Abkühlen der Grundschicht mittels einer Strömungsquelle, wie einem Gebläse, erfolgen. Alternativ oder zusätzlich kann der Grundschicht auch Wärme entzogen werden, indem sie einer verringerten Umgebungstemperatur ausgesetzt wird. So kann vorteilhafterweise erreicht werden, dass einerseits die Temperatur der Grundschicht verringert wird, so dass das mindestens eine Tröpfchen auf eine relativ kalte Grundschicht trifft. Andererseits ist eine Vertiefung, die durch das mindestens eine Tröpfchen in die Grundschicht eingebracht wurde, bis zur Fixierung beständiger als bei einer Grundschicht mit geringerer Viskosität.

Das Aufspritzen bzw. Aufbringen des mindestens einen Tröpfchens auf die flüssige Grundschicht erfolgt bevorzugt mittels Digitaldruck- bzw. Tintenstrahldrucktechnik. Dazu wird bevorzugt ein Digitaldruckkopf oder ein Digitaldüsenbalken verwendet.

Vorzugsweise wird das mindestens eine Tröpfchen mit einer Temperatur von > 40 °C, bevorzugt > 60 °C, besonders bevorzugt > 90 °C, aufgespritzt, wobei die flüssige Grundschicht und/oder das Werkstück eine Temperatur von < 40 °C, bevorzugt < 35°C, besonders bevorzugt < 30°C, aufweisen/aufweist. Je höher die Temperatur des mindestens einen Tröpfchens ist, desto besser kann es mittels Digitaldruck- bzw. Tintenstrahldrucktechnik verdruckt werden. Eine möglichst niedrige Temperatur von Grundschicht und/oder Werkstück beschleunigt vorzugsweise die Abkühlung, besonders bevorzugt die Erstarrung, des mindestens einen Tröpfchens.

Vorzugsweise erfolgt das Erstarren des mindestens einen Tröpfchens bei Kontakt mit der Grundschicht und/oder mit dem Werkstück innerhalb von weniger als 8 Sekunden, bevorzugt innerhalb von weniger als 3 Sekunden, besonders bevorzugt innerhalb von weniger als 0,5 Sekunden. Je schneller das mindestens eine Tröpfchen einen festen Aggregatszustand einnimmt desto schneller können die weiteren Bearbeitungsschritte durchgeführt werden. Vorzugsweise liegt der Schmelzpunkt des mindestens einen Tröpfchens oberhalb der Temperatur der flüssigen Grundschicht, mit der es in Kontakt tritt. Auf diese Weise wird das mindestens eine Tröpfchen nicht aufgrund der Temperatur der flüssigen Grundschicht wieder verflüssigt. Das Erstarren des mindestens einen Tröpfchens erfolgt umso schneller, je geringer die Temperatur der Grundschicht ist.

Vorzugsweise erfolgt das mindestens teilweise Entfernen des mindestens einen Tröpfchens mittels mechanischer, und/oder chemischer und/oder physikalischer Methoden, wobei optional auch Material der Grundschicht entfernt wird.

Vorzugsweise wird das mindestens eine Tröpfchen dazu mittels eines Lösemittels nach der Fixierung der Grundschicht wieder verflüssigt oder zumindest teilweise verflüssigt. So kann es anschließend besonders bevorzugt durch Absaugen aus der Grundschicht entfernt werden.

Unter mechanischen Methoden können abtragende Methoden verstanden werden. Beispielsweise kann darunter die Anwendung einer Schleif- oder Hobelmethode verstanden werden, wodurch Material der Grundschicht und/oder des mindestens einen Tröpfchens entfernt wird. Ferner können darunter auch Methoden verstanden werden, die ein Medium einsetzen, um das Material abzutragen. Z.B. kann die Oberfläche der Grundschicht und/oder das mindestens eine Tröpfchen mittels Sandstrahlen behandelt werden. Beim Abtragen durch Schleifmittel kommt vorzugsweise eine kontinuierlich arbeitende Schleifmaschine, wie sie typischerweise zum Lackschliff von lackierten Spanplatten für den Möbelbereich verwendet wird. Hersteller solcher Lackschliffmaschinen sind z.B. die Firmen Heesemann (Bad Oeynhausen), Fa. Büttfering (Homag AG Gruppe).

Vorzugsweise wird die Grundschicht bis zu einer bestimmten Tiefe entfernt, so dass anschließend das mindestens eine Tröpfchen, sofern es erstarrt ist, freiliegt und vorzugsweise aus der Grundschicht vorsteht. Auf diese Weise kann das mindestens eine Tröpfchen leicht durch physikalische oder mechanische Krafteinwirkung, beispielsweise durch Absaugen oder Ausbürsten, entfernt werden.

Durch das Entfernen von Teilen der fixierten Grundschicht, vorzugsweise von flächigen Bereichen der fixierten Grundschicht, kann erreicht werden, dass die mindestens eine Vertiefung, die durch das mindestens eine Tröpfchen gebildet wurde, eine scharf abfallende Flanke aufweist, wodurch die eingangs geforderte Schärfe der Struktur erreicht werden kann.

Vorzugsweise wird das mindestens eine erstarrte Tröpfchen vor und/oder während des mindestens teilweisen Entfernens durch Wiedererwärmen zumindest teilweise verflüssigt, und so aus bzw. von der Grundschicht entfernt. Das Entfernen erfolgt dabei vorzugsweise mittels physikalischer Methoden, wie Absaugen, Verdampfen oder auch durch Aufnehmen bzw. Aufsaugen des mindestens einen flüssigen Tröpfchens mit einem anderen Material. Ist das mindestens eine Tröpfchen nicht erstarrt bzw. in der Grundschicht fixiert, sondern liegt es in flüssiger Form vor, so kann das mindestens eine Tröpfchen auf dieselbe Art entfernt werden. Es entfällt lediglich die Notwendigkeit, das mindestens eine Tröpfchen zuvor wieder zu verflüssigen.

Ein Entfernen des mindestens einen Tröpfchens kann auch chemische Methoden beinhalten bzw. mittels einer chemischen Methode erfolgen. So kann beispielsweise ein Teil der Grundschicht und/oder des mindestens einen Tröpfchens mittels Chemikalien verflüssigt werden und anschließend in flüssiger Form entfernt werden. Bei besonders geeigneten Materialgemischen, vorzugsweise mit einem hohen Anteil von mehr als 30% Isophorondiamin, besteht eine gute Wasserlöslichkeit, so dass die Tröpfchen mittels Wasser wieder aus der fixierten Grundschicht ausgewaschen werden können.

Vorzugsweise besteht das mindestens eine Tröpfchen aus einem Material, vorzugsweise aus einem Acrylatgemisch, welches nicht durch UV-Strahlung zur Aushärtung, insbesondere zur Polymerisation, angeregt werden kann. Alternative Ausführungsformen sind Gemische, die vorzugsweise mindestens 20% Isophorondiamin enthalten, oder alternativ Paraffin / EVA - Gemische (sog. "Hotmelt-Inks"). Soll das mindestens eine Tröpfchen während der Durchführung der Verfahren, insbesondere während der Fixierung der Grundschicht, flüssig bleiben, so kann das mindestens eine Tröpfchen in einer speziellen Ausführungsform Wasser enthalten bzw. rein aus Wasser bestehen.

Vorzugsweise umschließt die flüssige Grundschicht das mindestens eine Tröpfchen sobald es sich auf bzw. in der Grundschicht befindet bzw. sobald die Grundschicht auf die Oberfläche des Werkstückes mit bereits aufgespritzten Tröpfchen aufgebracht wird, derart, dass eine Öffnung in der Grundschicht verbleibt, die eine geringere Fläche aufweist, als eine senkrechte Projektion des mindestens einen Tröpfchens senkrecht nach oben. Alternativ oder zusätzlich umschließt die flüssige Grundschicht das mindestens eine Tröpfchen vollständig. Das mindestens eine Tröpfchen ist somit in der Grundschicht eingeschlossen. Wird das mindestens eine Tröpfchen auf die flüssige Grundschicht aufgespritzt, so wird das mindestens eine Tröpfchen durch nachträgliches Umfließen durch die flüssige Grundschicht um- bzw. eingeschlossen. Das Aufspritzen mehrerer Tröpfchen auf die flüssige Grundschicht kann bevorzugt so erfolgen, dass je nach Abgabeparametern der Tröpfchen, wie Tröpfchengeschwindigkeit, Tröpfchenvolumen, etc., einige in die Grundschicht eindringen und von dieser umschlossen werden, wobei andere teilweise oder nicht umschlossen werden.

Vorzugsweise erfolgt das mindestens teilweise Entfernen des mindestens einen Tröpfchens durch ein erstes mechanisches Abtragen, vorzugsweise von 1 bis 50 $\mu$m, bevorzugt 5 bis 10 $\mu$m der gehärteten Grundschicht, besonders bevorzugt mittels einer Schleifvorrichtung, optional gefolgt von einem mechanischen Ausbürsten des so freigelegten mindestens einen Tröpfchens.

Alternativ oder zusätzlich erfolgt das mindestens teilweise Entfernen des mindestens einen Tröpfchens durch ein thermisches Aufheizen und Absaugen des mindestens einen dann wieder verflüssigten Tröpfchens.

Vorzugsweise wird die Grundschicht derart fixiert, dass nach dem Fixieren der Grundschicht die Oberfläche der fixierten Grundschicht durch das mindestens eine in der Grundschicht verbliebene Tröpfchen keine größeren Unebenheiten als max. 20 $\mu$m hat.

Vorzugsweise wird die Grundschicht derart fixiert, dass ein Bereich, der das mindestens eine Tröpfchen aufweist, gegenüber einem Bereich ohne aufgebrachte Tröpfchen einen unterschiedlichen Härtegrad von mindestens einem Faktor 2 aufweist. Der Härtegrad kann dabei vorzugsweise mit einem "Hamberger Hobel" bestimmt werden. Hierbei wird eine Spitze mit einer Kraft von 0,5 bis 5 N auf ein Werkstück gepresst und anschließend ein Ritzversuch durchgeführt. Das Ergebnis wird anschließend optisch begutachtet. Die Härtegrade können dabei durch unterschiedliche Zusammensetzungen der Materialen von Grundschicht und Tröpfchen beeinflusst werden, so dass beispielsweise unterschiedliche Härtegrade bei der Polymerisation dieser Materialen erreicht werden.

Vorzugsweise weist das mindestens eine Tröpfchen nach der Aushärtung bzw. Fixierung in der Grundschicht einen anderen Glanzgrad als die gehärtete Grundschicht auf. Dies ist dann vorteilhaft, wenn das mindestens eine Tröpfchen zumindest teilweise in der Grundschicht verbleiben soll und somit eine eingebrachte Vertiefung mit einem unterschiedlichen Glanzgrad zur umgebenden Grundschicht versehen werden soll. Beispielsweise könnte das mindestens eine Tröpfchen nur bis zu einer gewissen Tiefe, die geringer als die gesamte Tiefe der Vertiefung ist, verflüssigt und anschließend abgesaugt werden. Der nicht verflüssigte Teil des mindestens einen Tröpfchens würde in der Vertiefung in der Grundschicht verbleiben und hier den Boden der Vertiefung mit einem unterschiedlichen Glanzgrad versehen.

Der Glanzgrad des mindestens einen Tröpfchens weicht dabei vorzugsweise um mindestens 10 Glanzeinheiten, vorzugsweise mindestens 20 Glanzeinheiten, von dem Glanzgrad der fixierten Grundschicht ab, wobei die Glanzeinheiten nach DIN EN ISO 2813:2015 02 bei einem Winkel von 60° gemessen werden. Dadurch wird ein optisch deutlich wahrnehmbarer Glanzeffekt erkennbar. Das Einstellen des Glanzgrades kann beim Aufdrucken durch die Tröpfchengröße und/oder die Tröpfchenanzahl pro Fläche oder durch den Einsatz von Mattierungsmitteln variiert werden.

Die Glanzmessung erfolgt nach DIN EN ISO 2813:2015 02. Für die Glanzmessung wird die Lichtmenge, die eine Oberfläche im Verhältnis zu einem Referenzstandard aus poliertem Glas reflektiert, gemessen. Die dabei verwendete Maßeinheit ist GU (Gloss Units bzw. Glanzeinheiten). Die an der Oberfläche reflektierte Lichtmenge ist abhängig vom Einfallswinkel und den Eigenschaften der Oberfläche. Bei der Glanzmessung können unterschiedliche Einfallswinkel (20°, 60° und 85°) verwendet werden, um den Reflexionsgrad zu erfassen, wobei vorzugsweise mit dem Einfallswinkel von 60° gemessen wird. Alternativ kann auch der Mittelwert von Messungen zu den drei Einfallswinkeln verwendet werden. Der Reflexionsgrad vergleicht die von einem Glanzmessgerät abgestrahlte und empfangene Lichtenergie in Prozent bei einem bestimmten Einfallswinkel.

Vorzugsweise ist das mindestens eine erstarrte bzw. gehärtete Tröpfchen verglichen mit der gehärteten bzw. fixierten Grundschicht elastischer bzw. weicher. Das hat den Vorteil, dass das mindestens eine Tröpfchen so z.B. bei Einwirkung einer Kraft leichter verformt werden kann, wodurch ein Entfernen des mindestens einen Tröpfchens aus der Grundschicht, erleichtert wird.

Vorzugsweise erfährt das mindestens eine Tröpfchen, vorzugsweise während es erstarrt bzw. fixiert wird, eine Volumenverringerung. Auf diese Weise kann erreicht werden, dass das mindestens eine Tröpfchen sich spielbehaftet in der fixierten Grundschicht befindet, wodurch es leichter aus dieser entfernt werden kann. Eine Volumenänderung kann beispielsweise durch UV-Strahlung ausgelöst werden, die auf das mindestens eine Tröpfchen trifft. Eine weitere Möglichkeit wäre, das mindestens eine Tröpfchen so auszubilden, dass die Volumenverringerung aufgrund von Wärmeentzug oder Wärmezufuhr erfolgt.

Erfindungsgemäß ist eine Vorrichtung zum Herstellen einer Struktur auf einer Oberfläche eines Werkstückes vorgesehen, aufweisend:

- eine Aufbringungseinheit, die dazu ausgebildet ist, eine flüssige Grundschicht auf eine Oberfläche des Werkstückes aufzubringen;
- eine Abgabeeinheit, die dazu ausgebildet ist, mindestens ein Tröpfchen in die noch nicht erstarrte Grundschicht aufzuspritzen;
- eine Fixierungseinheit, die dazu ausgebildet ist, die flüssige Grundschicht zu fixieren;
- eine Bearbeitungseinheit, die dazu ausgebildet ist, das mindestens eine Tröpfchen mindestens teilweise zu entfernen;
- eine Steuereinheit, die dazu ausgebildet ist, die Vorrichtung entsprechend dem oben beschriebenen Verfahren zu steuern.

Vorzugsweise ist die Abgabeeinheit mit einer oder mehreren Druckkopfreihen jeweils über die gesamte Werkstückbreite ausgerüstet.

Vorzugsweise weist die Vorrichtung eine Transporteinheit auf, die dazu ausgebildet ist, das Werkstück der Aufbringungseinheit, der Abgabeeinheit, der Fixierungseinheit und der Bearbeitungseinheit zuzuführen, wobei die Transporteinheit vorzugsweise ein Transportband aufweist.

Vorzugsweise weist die Aufbringungseinheit eine Auftragswalze, einen Digitaldruckkopf und/oder einen Digitaldüsenbalken auf, womit die flüssige Grundschicht auf das Werkstück aufgebracht werden kann.

Vorzugsweise weist die Abgabeeinheit einen Digitaldruckkopf und/oder einen Digitaldüsenbalken auf, womit das Aufspritzen des mindestens einen Tröpfchens in die Grundschicht erfolgen kann.

Vorzugsweise weist die Fixierungseinheit eine UV-Lichtquelle, eine Wärmequelle und/oder eine Strömungsquelle auf, womit ein Fixieren bzw. Aushärten der Grundschicht erfolgen kann. Zusätzlich kann damit auch ein Aushärten des mindestens einen Tröpfchens durchgeführt werden, wenn dieses zur Aushärtung mit einer dieser Methoden ausgebildet ist. Eine Wärmequelle kann dabei vorzugsweise einen Infrarotstrahler oder eine Heizung aufweisen, wobei die Wärmequelle vorzugsweise zur Trocknung der Grundschicht und/oder des mindestens einen Tröpfchens ausgebildet ist. Eine Strömungsquelle kann bevorzugt ein Gebläse aufweisen, das zur Beströmung der Grundschicht und/oder des mindestens einen Tröpfchens mit einem Medium, vorzugsweise Luft, ausgebildet ist. Die Strömungsquelle ist vorzugsweise zur Trocknung der Grundschicht und/oder des mindestens einen Tröpfchens ausgebildet.

Vorzugsweise weist die Bearbeitungseinheit eine Bürste, eine Absaugvorrichtung, eine Abtragungsvorrichtung, wie z.B. eine Schleif- oder Hobelvorrichtung oder auch eine Sandstrahlvorrichtung, eine Vorrichtung zur Abgabe einer Substanz auf die Grundschicht und/oder die Tröpfchen, die zur chemischen Reaktion mit der Grundschicht und/oder mit den Tröpfchen ausgebildet ist, und/oder eine Wärmequelle auf. So kann vorzugsweise die Oberfläche der Grundschicht derart verändert werden, dass beispielsweise durch Abtragen von Material das mindestens eine Tröpfchen freigelegt wird. Auch ein reines Nachbearbeiten der Grundschicht und/oder des mindestens einen Tröpfchens unter dekorativen Gesichtspunkten ist möglich.

Nachfolgend wird die Erfindung anhand bevorzugter Ausführungsformen unter Zuhilfenahme der beigefügten Zeichnungen erläutert.

Es zeigen

Fig. 1    ein Werkstück mit einer flüssigen Grundschicht, in welche flüssige Tröpfchen aufgespritzt wurden,

Fig. 2    eine Möglichkeit, aufgespritzte Tröpfchen wieder zu entfernen,

Fig. 3a    ein Werkstück mit einer flüssigen Grundschicht, in welche flüssige Tröpfchen aufgespritzt wurden, wobei die flüssige Grundschicht die Tröpfchen zumindest teilweise umschließt,

Fig. 3b    dasselbe Werkstück wie in Fig. 3a nach einem weiteren Bearbeitungsschritt,

Fig. 4    eine erfindungsgemäße Vorrichtung zur Durchführung des Verfahrens,

Fig. 5    ein Werkstück mit einer flüssigen Grundschicht in welche flüssige Tröpfchen aufgespritzt wurden, wobei mehrere Tröpfchen an demselben Ort aufgespritzt wurden, und

Fig. 6    ein Aufspritzen von Tröpfchen auf ein Werkstück vor dem Aufbringen der flüssigen Grundschicht sowie eine Möglichkeit, eine flüssige Grundschicht auf ein Werkstück aufzubringen.

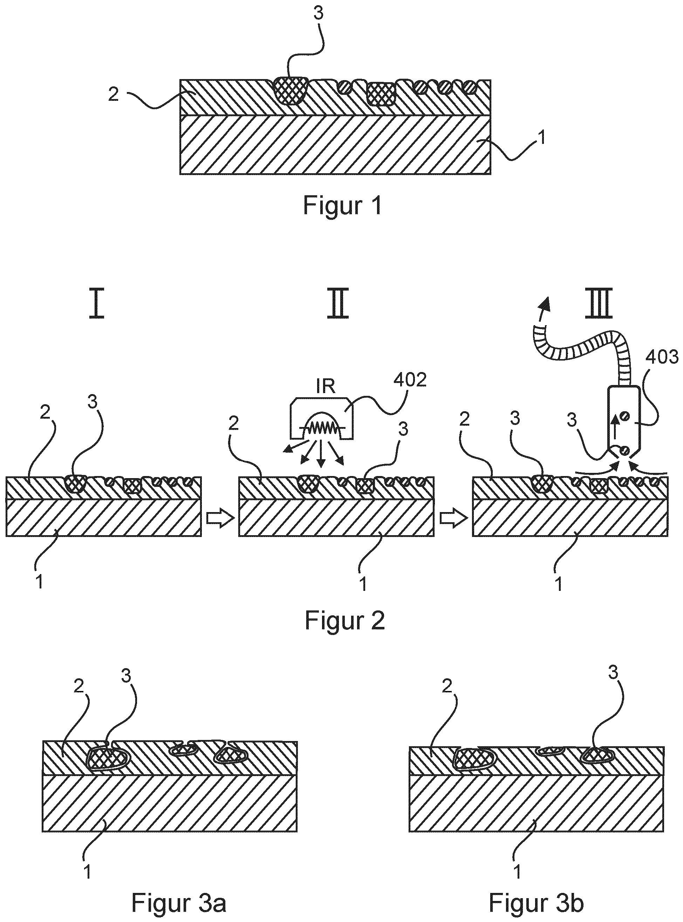

Fig. 1 zeigt ein Werkstück 1 mit einer flüssigen Grundschicht 2 auf welche flüssige Tröpfchen 3 aufgespritzt wurden. Diese Tröpfchen 3 haben die flüssige Grundschicht 2 lokal verdrängt wodurch Vertiefungen in der Grundschicht 2 entstanden sind. Die Tröpfchen 3 füllen die durch das Aufspritzen entstandenen Vertiefungen teilweise, beispielsweise zu 50% der Höhe oder des Volumens der Vertiefung, oder zu 100% der Höhe oder des Volumens der Vertiefung aus, so dass sich nach dem Aufspritzen der Tröpfchen 3, und vor der Aushärtung der flüssigen Grundschicht 2 eine im Wesentlichen glatte Oberfläche ergibt.

Fig. 2 zeigt in der Ansicht I links ein Werkstück 1 gemäß Fig. 1 mit den aufgespritzten Tröpfchen 3 und mit bereits ausgehärteter flüssiger Grundschicht 2. Dieses Werkstück 1 wird zu einer Wärmequelle 402 in Form einer Infrarotlampe transportiert, die in Ansicht II über dem Werkstück 1 dargestellt ist. Unter dieser Wärmequelle 402 wird durch die Infrarotstrahlung die Oberfläche des Werkstückes 1, insbesondere die Grundschicht 2 und die Tröpfchen 3, wieder erwärmt. Durch das Erwärmen werden die Tröpfchen 3 wieder verflüssigt, wobei die mittlerweile ausgehärtete Grundschicht 2 fest bleibt. Anschließend wird das Werkstück 1 mit den flüssigen Tröpfchen 3 zu einer in Ansicht III rechts gezeigten Absaugvorrichtung 403 transportiert, an der die wieder flüssig gewordenen Tröpfchen 3 abgesaugt werden. Auf diese Weise können die Tröpfchen 3 vollständig oder auch nur teilweise von der Grundschicht 2 entfernt werden. Bei teilweiser Entfernung ist darauf zu achten, nicht das gesamte Tröpfchen 3 zu verflüssigen.

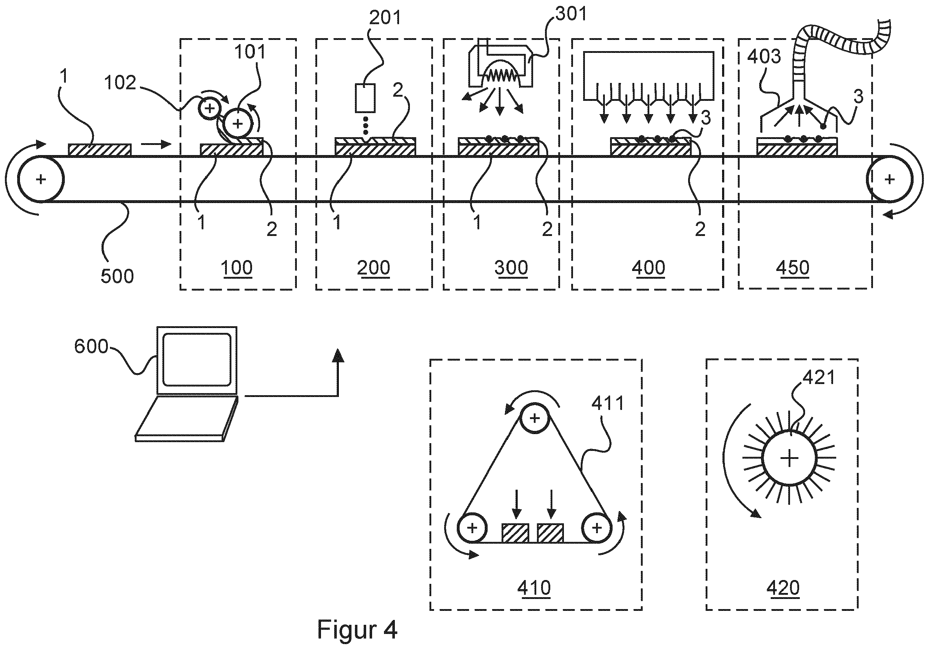

Eine derartige Anordnung von Wärmequelle 402 und Absaugvorrichtung 403 kann beispielsweise in einer Vorrichtung zur Durchführung des erfindungsgemäßen Verfahrens, wie sie in Fig. 4 gezeigt ist, vorgesehen sein.

Fig. 3a zeigt ein Werkstück 1 mit einer flüssigen Grundschicht 2, in welche flüssige Tröpfchen 3 aufgespritzt wurden. Im Unterschied zu der Konfiguration in Fig. 1 hat sich hier die flüssige Grundschicht 2 oberhalb der Tröpfchen 3 vor der Fixierung zumindest teilweise wieder geschlossen. Während die beiden Tröpfchen 3 rechts vollständig von der Grundschicht 2 eingeschlossen sind, ist oberhalb des linken Tröpfchens 3 keine vollständige Schließung der Oberfläche der Grundschicht 2 erkennbar. Hier ist eine Öffnung oberhalb des Tröpfchens 3 verblieben, deren Fläche senkrecht nach oben jedoch kleiner ist als eine Projektionsfläche des Tröpfchens 3 senkrecht nach oben.

Fig. 3b zeigt das Werkstück 1 aus Fig. 3a nach einer sich an die Fixierung der Grundschicht 2 anschließenden mechanischen Bearbeitung, die beispielsweise mit einer Schleifmaschine durchgeführt wurde. Durch diese Bearbeitung wurde eine bestimmte Materialmenge der Grundschicht 2 abgetragen, so dass die eingedrungenen Tröpfchen 3 wieder freigelegt wurden.

Das Freilegen der Tröpfchen 3 kann dabei so erfolgen, dass nur so viel Material der Grundschicht 2 abgetragen wird, dass die Tröpfchen 3 zwar sichtbar sind, jedoch nicht über ihre gesamte Querschnittsfläche freigelegt wurden. Dieses Ergebnis ist in Fig. 3b gezeigt. Es ist dabei deutlich zu erkennen, dass die Vertiefungen in der Grundschicht 2 Hinterschneidungen bilden, die von den Tröpfchen 3 ausgefüllt werden. Werden die Tröpfchen 3 anschließend aus der Grundschicht 2 entfernt, beispielsweise wie in Fig. 2 gezeigt, so verbleibt die Hinterschneidung in der Grundschicht 2, was einen dekorativen Effekt erzielen kann.

Alternativ dazu bzw. an anderen Bereichen der Grundschicht 2 kann auch so viel Material abgetragen werden, dass die Tröpfchen 3 mit ihrer gesamten, nach oben projizierten Querschnittsfläche freiliegen. Dann verbleibt keine Hinterschneidung in der Vertiefung. Stattdessen wird eine scharf in die Vertiefung abfallende Kante erzeugt. Auf diese Weise kann eine scharfe Kontur, beispielsweise einer Holzmaserung, dargestellt werden.

**Fig. 4** zeigt eine erfindungsgemäße Vorrichtung zur Durchführung des erfindungsgemäßen Verfahrens.

Die Vorrichtung ist als Produktionsstraße ausgebildet, die einzelne Einheiten 100, 200, 300, 400, 450 aufweist, die zur Durchführung der einzelnen Verfahrensschritte ausgebildet sind. Alternativ oder zusätzlich kann die Vorrichtung auch die Einheiten 410 und 420 aufweisen.

Die Vorrichtung weist ferner eine Transporteinheit 500 auf, die dazu ausgebildet ist, ein Werkstück 1 zu den einzelnen Einheiten 100, 200, 300, 400, 450 zu befördern.

Ferner weist die Vorrichtung eine Steuereinheit 600 auf, die dazu ausgebildet ist, die einzelnen Einheiten 100, 200, 300, 400, 450, 500 zur Durchführung der entsprechenden Verfahrensschritte anzusteuern, bzw. die Durchführung des erfindungsgemäßen Verfahrens in der Vorrichtung zu veranlassen.

In der gezeigten Darstellung der Vorrichtung weist die Transporteinheit 500 ein Transportband auf, das sich von links nach rechts erstreckt und dazu ausgebildet ist, Werkstücke 1 von links nach rechts in Transportrichtung zu den einzelnen Einheiten 100, 200, 300, 400, 450 zu befördern.

In Transportrichtung ist zunächst eine Aufbringungseinheit 100 gezeigt, die dazu ausgebildet ist, die Grundschicht 2 in flüssiger Form auf das Werkstück 1 aufzubringen. In der dargestellten Ausführungsform weist die Aufbringungseinheit 101 eine rotierende Auftragswalze 101 auf, mit der die Grundschicht 2 auf die in der Zeichnung nach oben weisende Oberfläche des Werkstückes 1 aufgebracht wird, sowie eine Gegendruckwalze 102. Dazu rollt die Auftragswalze 101 an der Oberfläche des Werkstückes 1 ab. In einer alternativen Ausführungsform kann alternativ oder zusätzlich die Aufbringungseinheit 100 jedoch auch andere Elemente aufweisen, die zur Aufbringung der Grundschicht 2 ausgebildet sind. Insbesondere können dafür Digitaldruckeinheiten, wie ein Digitaldruckkopf oder ein Digitaldüsenbalken vorgesehen sein, welche anstelle der Auftragswalze 101 oder zusätzlich zu dieser die Grundschicht 2 auf das Werkstück 1 auftragen. Alternativ kann die Aufbringungseinheit 100 auch als Gießmaschine ausgeführt sein, bei der das Werkstück 1 durch einen Lackvorhang hindurchbewegt wird.

In einer bevorzugten Ausführungsform sind dabei Parameter der Grundschicht 2, insbesondere die Materialmenge bzw. die Schichtstärke oder die Temperatur der Grundschicht 2 beim Aufbringen auf das Werkstück 1, durch die Aufbringungseinheit 100 beeinflussbar.

In Transportrichtung schließt sich an die Aufbringungseinheit 100 eine Abgabeeinheit 200 an, die zur Abgabe der Tröpfchen 3 in die noch nicht erstarrte Grundschicht 2 ausgebildet ist. Die Abgabeeinheit 200 weist zur Abgabe der Tröpfchen 3 einen oder mehrere Digitaldruckkopf bzw. -köpfe 201 und/oder einen oder mehrere, ggf. in Transportrichtung hintereinander angeordnete Digitaldüsenbalken mit mehreren, sich über die Breite des Werkstückes erstreckenden Digitaldruckköpfen auf, die die Tröpfchen 3 auf die Grundschicht 2 abgeben bzw. aufspritzen können. Dabei ist die Abgabeeinheit 200 so ausgebildet, dass die Tröpfchen 3 so in die noch nicht erstarrte Grundschicht 2 eindringen, dass sie die Grundschicht 2 verdrängen und darin Vertiefungen ausbilden, die durch die Tröpfchen 3 zumindest zum Teil ausgefüllt wird. Die Abgabeeinheit 200 (oder digitale Druckstation) kann ferner so ausgebildet sein, dass die Tröpfchen 3 so in die noch nicht erstarrte Grundschicht 2 eindringen, dass sie von der Grundschicht 2 zumindest teilweise eingeschlossen werden.

In einer bevorzugten Ausführungsform sind dabei Parameter der Tröpfchen 3, insbesondere das Tröpfchenvolumen bzw. die Tröpfchenmasse oder die Abgabe- bzw. Auftreffgeschwindigkeit auf die Grundschicht 2, durch die Abgabeeinheit 200 beeinflussbar. Die Tröpfchenvolumen können vorzugsweise innerhalb eines Rahmens von 3 bis 200 pL (Pikoliter) gesteuert werden, die Auftreffgeschwindigkeit liegt vorzugsweise im Bereich von 2 bis 10 m/s, besonders bevorzugt im Bereich von 3 bis 5 m/s.

In Transportrichtung folgt nach der Abgabeeinheit 200 eine Fixierungseinheit 300, die dazu ausgebildet ist, die Grundschicht 2 zu fixieren. Zur Fixierung der Grundschicht 2 weist die Fixierungseinheit 300 mindestens eine UV-Lichtquelle 301, wie z.B. einen LED-UV-Strahler auf. Die mindestens eine UV-Lichtquelle 301 strahlt dabei UV-Licht auf die Grundschicht 2 ab und löst darin Aushärt- bzw. Polymerisierungsvorgänge aus, wodurch sich die Grundschicht 2, die vor der Bestrahlung mit UV-Licht zumindest noch nicht erstarrt war, nun verfestigt und aushärtet bzw. wodurch sie fixiert wird. Alternativ oder zusätzlich kann auch eine Wärmequelle und/oder eine Strömungsquelle vorgesehen sein. Die Wärmequelle, z.B. eine Infrarotlichtquelle oder eine Heizung, ist dazu ausgebildet, Wärme an das Werkstück 1, die Grundschicht 2 und/oder die Tröpfchen 3 abzugeben. Die Strömungsquelle, z.B. ein Gebläse, ist dazu ausgebildet, Luft oder ein anderes Gas bzw. Medium zur Trocknung über die Grundschicht 2 bzw. die Tröpfchen 3 strömen zu lassen, um eine Trocknung oder auch eine Fixierung mittels Trocknung der Grundschicht 2 und/oder der Tröpfchen 3 zu erreichen.

In einer bevorzugten Ausführungsform sind dabei die Parameter, mit der die Fixierungseinheit 300 betrieben wird, insbesondere die Energie bzw. Wellenlänge der abgegebenen UV-Strahlung der mindestens einen UV-Lichtquelle 301, die abgegebene Energie der Wärmequelle, der Massenstrom bzw. die Strömungsgeschwindigkeit oder die Temperatur des strömenden Mediums der Strömungsquelle, durch die Fixierungseinheit 300 beeinflussbar. Üblicherweise liegt die Wellenlänge der UV-Strahlung im UV-A und ggf. im UV-B Bereich, d.h. 280 nm bis 400 nm. Die Leistung der UV-Strahler für eine Produktionsgeschwindigkeit von 20 m/min. liegt bei etwa 2x bis 5x 200 W/cm Arbeitsbreite, d.h. bei einer Werkstückbreite von 135 cm ergibt sich eine benötigte Leistung der UV-Strahler von etwa 50 bis 125 kW.

In einer bevorzugten Ausführungsform ist die Fixierungseinheit 300 dazu ausgebildet, neben der Grundschicht 2 auch die Tröpfchen 3 mit zu fixieren.

Der Fixierungseinheit 300 schließt sich in Transportrichtung eine Bearbeitungseinheit an, die dazu ausgebildet ist, das Werkstück 1 mit der darauf befindlichen fixierten Grundschicht 2 und den Tröpfchen 3 nachzubearbeiten.

Ein Nachbearbeitungsschritt ist dabei das zumindest teilweise Entfernen der Tröpfchen 3 aus der Grundschicht 2. Dazu weist die Bearbeitungseinheit verschiedene Elemente auf. In der hier gezeigten Ausführungsform ist die Einheit 400 als ein Düsenkanal mit einem Heißluftgebläse ausgestaltet, um die erstarrten Tröpfchen 3 nach der Fixierung der Grundschicht 2 wieder zu erwärmen und zu verflüssigen. In der nachgeschalteten Einheit 450 werden die so verflüssigten Tröpfchen 3 wieder abgesaugt. Dies erfolgt mit einer bereits in Fig. 2 erwähnten Absaugvorrichtung 403.

In einer alternativen Ausführungsform kann eine Bearbeitungseinheit auch die Einheiten 410, 420 aufweisen. Diese können auch zusätzlich zu den Einheiten 400, 450 vorgesehen sein. Die Einheit 410 ist dabei als eine Schleifvorrichtung (Schleifmaschine) ausgebildet. Dabei weist die Einheit 410 ein umlaufendes Schleifband 411 auf, welches im Gleichlauf oder im Gegenlauf zu dem auf der Transporteinrichtung 500 geführten Werkstück 1 läuft. Auf diese Weise kann Material von der Grundschicht 2 abgetragen werden, wobei die Tröpfchen 3 in der Grundschicht 2 zumindest teilweise freigelegt werden können.

Die Einheit 420 weist eine Bürste 421 auf, die hier als rotierende Bürstenwalze ausgeführt ist. Die Bürste 421 ist dabei so ausgebildet, dass sie die Tröpfchen 3 mittels mechanischem Zusammenwirken von Borsten mit den Tröpfchen 3 aus der fixierten bzw. erstarrten Grundschicht 2 entfernen kann. Die Tröpfchen 3 sind dabei vorzugsweise in der Grundschicht 2 erstarrt, so dass die Borsten der Bürste 401 gut an den Tröpfchen 3 angreifen können.

Die Absaugvorrichtung 403 der Einheit 450 kann jedoch auch dazu ausgebildet sein, die Tröpfchen 3 in fester Form aus der Grundschicht 2 zu saugen. Dies setzt voraus, dass die Tröpfchen 3 so ausgebildet sind, dass sie bei der Verfestigung keine Verbindung mit der Grundschicht 2 eingehen.

Alternativ oder zusätzlich kann die Einheit 410 auch eine solche Schleifvorrichtung aufweisen, die dazu ausgebildet ist, zumindest einen Teil der erstarrten Grundschicht 2 durch Schleifen zu entfernen. Dabei erfolgt das Entfernen der Grundschicht 2 bevorzugt schichtweise, so dass also von oben durch Schleifen Material von der Grundschicht 2 abgetragen wird. Dabei kann die Schleifvorrichtung auch dazu ausgebildet sein, neben der erstarrten Grundschicht 2 auch Material der Tröpfchen 3 abzutragen.

Die Schleifvorrichtung ist vorzugsweise dazu ausgebildet, die Tröpfchen 3 zumindest teilweise freizulegen, sofern sie vorher zumindest teilweise von der Grundschicht 2 umschlossen waren. Im Anschluss können die freigelegten Tröpfchen dann mittels einer Einheit 420 mittels der rotierenden Bürste 421 vollständig oder teilweise entfernt werden.

Alternativ oder zusätzlich weist die Bearbeitungseinheit auch eine Abgabevorrichtung auf, die dazu ausgebildet ist, eine Substanz auf die fixierte Grundschicht 2 und/oder auf die Tröpfchen 3 abzugeben, wobei die Substanz dazu ausgebildet ist, mit der Grundschicht 2 und/oder mit den Tröpfchen 3 eine chemische Reaktion einzugehen. Alternativ kann die Substanz auch ein Lösungsmittel sein, um die Tröpfchen 3 in Lösung zu bringen und anschließend mit einer Einheit 450 abzusaugen. Auf diese Weise können die Grundschicht 2 und/oder die Tröpfchen 3 zumindest teilweise entfernt werden. Alternativ oder zusätzlich kann jedoch auch eine optische und/oder haptische Veränderung der Grundschlicht 2 und/oder der Tröpfchen 3 erreicht werden.

In einer bevorzugten Ausführungsform ist die Bearbeitungseinheit dazu ausgebildet, die Materialmenge die von der Grundschicht 2 und/oder von den Tröpfchen 3 entfernt wird, zu beeinflussen.

Die Steuereinheit 600 weist beispielsweise ein Steuermittel auf, wie hier beispielsweise ein elektronisches Steuergerät, auf dem Programmcode vorhanden ist, der bei dessen Ausführung die Steuereinheit 600 zur Durchführung des erfindungsgemäßen Verfahrens veranlasst.

Die Vorrichtung kann auch in einer nicht gezeigten Ausführungsform so ausgebildet sein, dass die Aufbringungseinheit 100 erst nach der Abgabeeinheit 200 angeordnet ist. Auf diese Weise ist der Auftrag von Tröpfchen 3 auf das Werkstück 1 möglich, gefolgt von einem Aufbringen der flüssigen Grundschicht 2. Auch kann eine Anordnung von Abgabeeinheit 200, Aufbringungseinheit 100 und einer weiteren Abgabeeinheit 200 in Transportrichtung möglich sein, um einen Auftrag von Tröpfchen 3 sowohl auf das Werkstück 1 als auch auf die Grundschicht 2 zu ermöglichen.

Die Bearbeitungseinheit kann sämtliche oben genannten Einheiten 400, 410, 420, 450 in Transportrichtung in beliebiger Reihenfolge oder nur eine Auswahl dieser Einheiten 400, 410, 420, 450 aufweisen, wobei auch eine Wiederholung von Einheiten 400, 410, 420, 450 in Transportrichtung denkbar ist.

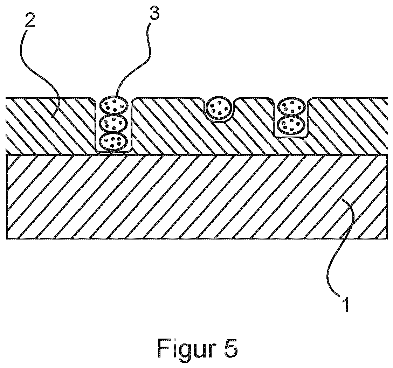

Fig. 5 zeigt ein Werkstück 1 für einen Ausführungsfall, in dem mehrere Tröpfchen 3 an demselben räumlichen Ort abgegeben wurden, und übereinander in der flüssigen Grundschicht 2 verbleiben (linke sowie rechte Anordnung der Tröpfchen 3). Hier ist deutlich zu erkennen, dass die Tröpfchen 3 übereinander gestapelt wurden, so dass eine deutlich tiefere Vertiefung, bzw. eine deutlich tiefere Struktur in der Grundschicht 2 entsteht. Bei der linken Anordnung der Tröpfchen 3 erstreckt sich die Vertiefung auch bis auf die Oberfläche des Werkstücks 1.

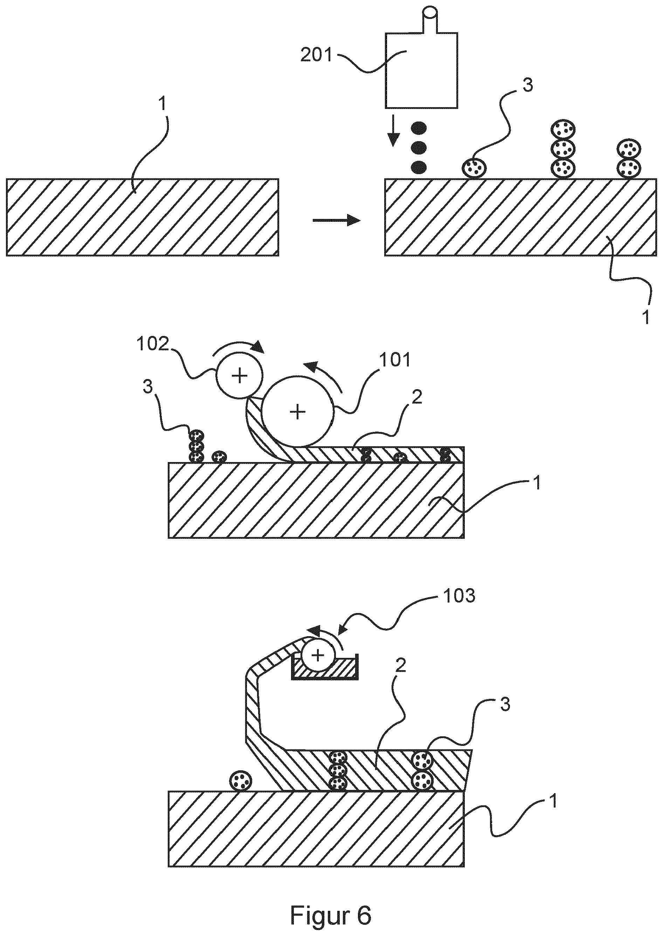

**Fig. 6** zeigt in der Darstellung oben ein Aufspritzen von Tröpfchen 3 auf ein Werkstück 1 vor dem Aufbringen einer flüssigen Grundschicht. Darunter ist zunächst das Aufbringen einer flüssigen Grundschicht 2 auf ein Werkstück 1 mittels Auftragswalze 101 gezeigt. Die unterste Darstellung zeigt eine Möglichkeit, eine flüssige Grundschicht 2 mittels einer Gießmaschine 103 auf ein Werkstück 1 aufzutragen.

Bei der Darstellung oben wird das Werkstück 1 zu einem Digitaldruckkopf 201 geführt, der Tröpfchen 3 auf die Oberfläche des Werkstücks 1 abgibt. Diese können, wie dargestellt, auch zu größeren Tröpfchen bzw. zu komplexeren Formen zusammengeführt werden.

Die mittlere Darstellung zeigt ein Aufbringen einer flüssigen Grundschicht 2 auf dieses Werkstück 1. Dabei werden die Tröpfchen 3, die sich auf der Oberfläche des Werkstücks 1 befinden, entsprechend von der flüssigen Grundschicht 2 umflossen. Die flüssige Grundschicht wird hierbei mittels einer Auftragswalze 101 auf das Werkstück 1 aufgebracht. Die Auftragswalze korrespondiert dabei mit einer Gegendruckwalze 102, wie bereits oben erläutert. So erfolgt ein Aufbringen der flüssigen Grundschicht 2, wobei die Auftragswalze 101 an der Oberfläche des Werkstücks 1 abrollt, wobei sich das Werkstück 1 von links nach rechts unter der Auftragswalze 101 hindurchbewegt.

In der unteren Darstellung wird die flüssige Grundschicht 2 mittels einer Gießmaschine 103 aufgebracht, wobei die Gießmaschine 103 einen Vorhang aus dem Material der flüssigen Grundschicht 2 erzeugt, unter dem dann das Werkstück 1 von links nach rechts hindurch bewegt wird.

Abschließend erfolgt die weitere Beschreibung der Erfindung anhand fünf konkreter Ausführungsbeispiele.

Ausführungsbeispiel 1:

Ein Werkstück 1 in Form einer Spanplatte mit 12 mm Dicke wird einer Lackierstation zugeführt. Darin wird die Spanplatte mindestens an der Oberfläche mit einem weißen Grundlack versehen. Dieser Grundlack wird über ein UV-Modul ausgehärtet.

Anschließend wird die so weiß grundierte Spanplatte im Digitaldruckverfahren mit einem Holzdekor, z.B. Eiche- oder Pinie-Dekor digital bedruckt.

Anschließend wird das so bedruckte Werkstück 1 einer weiteren Lackierstation zugeführt, an der die flüssige Grundschicht 2 auf das Werkstück 1 aufgebracht wird, und zwar in Form eines UV-härtenden Acrylatlacks nach dem Stand der Technik. Als Auftragsmenge wird ein Wert von mehr als 30 g/m$^2$ mit mehr als 30 μm Schichtstärke, besonders bevorzugt mehr als 120 μm Schichtstärke, gewählt.

Danach wird das Werkstück 1 einer digitalen Druckstation zugeführt, welche Druckköpfe mit einer auf 85 °C erhitzten Flüssigkeit (Tinte) enthält. Als Tinte wird beispielsweise diejenige der Firma Sunjet mit der Markenbezeichnung Sunjet Crystal HEP9520 gewählt. Aus dieser Druckstation werden anschließend eine Vielzahl von Tröpfchen 3 der Tinte nach einer digitalen Druckvorlage auf das Werkstück 1 mit der flüssigen Grundschicht 2 abgegeben, wobei dadurch in die noch flüssige Grundschicht 2 Vertiefungen von 30 bis 120 μm eingebracht werden. Die Tröpfchen 3 werden mit einer Temperatur von mehr als 80 °C aufgebracht, und erstarren beim Auftreffen auf die flüssige Grundschicht, welche eine Temperatur von 20 bis 30 °C hat, durch Abkühlung innerhalb von weniger als 0,5 Sekunden in den von ihnen selbst eingebrachten Vertiefungen.

Danach wird das Werkstück 1 einer UV-Härtung zugeführt, bei der drei UV-Lampen mit einer Leistung von jeweils 200 W/cm$^2$ die Grundschicht 2 aushärten.

Anschließend wird das Werkstück 1 mit der ausgehärteten Grundschicht 2 in einer IR-Station mit Infrarot-Strahlung auf mehr als 100 °C Oberflächentemperatur erhitzt, so dass die Tröpfchen 3 wieder flüssig werden. Diese flüssigen Tröpfchen 3 werden dann in einer Absaugungsstation von der Grundschicht 2 entfernt.

Alternativ oder zusätzlich werden die Tröpfchen 3 mittels mechanischer Mittel, wie zum Beispiel einer rotierenden Bürste, entfernt.

In einer Weiterbildung dieser Ausführungsform wird nach dem Entfernen der Tröpfchen 3 das Werkstück 1 einer Schleifmaschine oder einer kombinierten Schleif/Bürstenmaschine zugeführt, um in der Oberfläche Schleifriefen zu erzeugen, die die nach dem erfindungsgemäßen Verfahren hergestellte Struktur noch natürlicher aussehen lässt.

Ausführungsbeispiel 2:

Ein Werkstück 1 in Form einer Kunststoffplatte aus einem PVC-Gemisch mit einer Stärke von 5 mm und einer vorab dekorativ bedruckten Oberfläche wird einer Beschichtungsstation zugeführt.

Hier wird eine flüssige Grundschicht 2 aus einem UV-härtenden Acrylat-Material nach dem Stand der Technik aufgebracht, und zwar mit einer Schichtstärke von 40 bis 300 μm, bevorzugt mit 90 bis 120 μm.

Das so beschichtete Werkstück 1 wird anschließend zu einer digitalen Druckstation transportiert, wo die flüssige Grundschicht 2 mittels darauf abgegebener Tinte in Form von Tröpfchen 3 nach einer digitalen Vorlage strukturiert wird. Dabei dringen die abgegebenen Tröpfchen 3 mit einem Volumen zwischen 6 pL und 400 pL in die flüssige Grundschicht 2 derart ein, dass die Grundschicht 2 sich nach dem Eindringen der Tröpfchen 3 über diesen wieder schließt.

Die Tröpfchen 3 sind aus einem Material beschaffen, welches als wesentliche Grundlage ebenfalls aus Acrylaten besteht. Allerdings enthalten die Tröpfchen 3 keine Mittel zur Anregung einer UV-Aushärtung, wie dies bei dem Material der flüssigen Grundschicht 2 der Fall ist.

In der darauf folgenden UV-Station wird daher die flüssige Grundschicht 2 mittels UV-LED-Strahlern ausgehärtet, während die eingeschlossenen Tröpfchen 3 flüssig bleiben.

Anschließend wird mittels eines mechanischen Verfahrens unter Verwendung einer Schleifmaschine die Oberfläche der ausgehärteten Grundschicht 2 soweit angeschliffen, dass die noch flüssigen Tröpfchen 3 darunter gerade freiliegen. In einem weiteren Verfahrensschritt werden die noch flüssigen Tröpfchen 3 mit einer Bürste ausgebürstet.

In einer alternativen Ausführungsform werden die noch flüssigen Tröpfchen 3 durch den Auftrag eines Lösemittels und anschließende Absaugung des Lösemittels entfernt.

Ausführungsbeispiel 3:

Ein Werkstück 1 in Form einer Kunststoffplatte aus einem gefüllten PP-Gemisch (z.B. Polypropylen mit Kreide) mit einer Stärke von 4,2 mm, einer Länge von 2.800 mm, einer Breite von 1.350 mm und einer unifarbig lackierten Oberfläche wird einer Beschichtungsstation zugeführt. Auf und unter der unifarbigen Oberfläche können weitere Lack- und/oder Primerschichten aufgebracht sein.

In der Beschichtungsstation wird eine flüssige Grundschicht 2 aus einem UV-härtenden Acrylat-Material nach dem Stand der Technik aufgebracht, und zwar mit einer Schichtstärke von 100 bis 150 $\mu$m. Dieses Material hat nach der unten beschriebenen Fixierung mittels UV-Strahlung einen Schmelzpunkt von > 300 °C. Die Viskosität dieser Schicht liegt bei einer Temperatur von 85 °C bei ca. 11 mPas.

Das so beschichtete Werkstück 1 wird anschließend zu einer digitalen Druckstation transportiert, wo die flüssige Grundschicht 2 mittels darauf abgegebener Tinte in Form von Tröpfchen 3 nach einer digitalen Vorlage strukturiert wird. Die Tröpfchen haben bestehen zu einem Anteil von 20 - 40% aus Isophorondiamin, und haben einen Schmelzpunkt von 88 °C. Sie werden in der Druckstation bei einer Temperatur von 95 °C vorgehalten, und mit dieser Temperatur aus digitalen Druckköpfen auf die flüssige Grundschicht 2 abgegeben. Der Abstand der Druckköpfe zu der flüssigen Grundschicht 2 beträgt 1 mm bis 10 mm, bevorzugt 1,5 mm bis 3 mm. Die Geschwindigkeit der Tröpfchen 3 vor dem Eindringen in die flüssige Grundschicht 2 beträgt 3 bis 10 m/s, bevorzugt 4 bis 5 m/s. Die abgegebenen Tröpfchen 3 haben ein Volumen zwischen 6 pL und 400 pL, bevorzugt 10 bis 30 pL.

Die digitalen Druckköpfe in der Druckstation sind so beschaffen, dass sie aus einem Druckkopf an einer räumlichen Stelle mehrere Tröpfchen 3 übereinander abgeben können. Dadurch formt sich in der flüssigen Grundschicht 2 eine Art "Turm" aus übereinander liegenden Tröpfchen 3, dessen Höhe h sich ermittelt aus

$$h = n \times D,$$

wobei n: Zahl der an einer Stelle übereinander abgegeben Tröpfchen, und D: Durchmesser der Tröpfchen. In der bevorzugten Ausführungsform ergibt sich für n = 3 Tröpfchen mit einem jeweiligen Volumen von 80 pL und einem Druchmesser von 40 $\mu$m eine Höhe h = 120 $\mu$m.

Die digitale Druckstation ist so ausgeführt, dass sich die Druckköpfe in einer oder mehreren Reihen über die gesamte Transportbreite erstrecken. In einer erfindungsgemäßen Ausführungsform werden Druckköpfe der Firma Xaar (Type Xaar 1003) verwendet, welche eine effektive Druckbreite von 68 mm haben. Daher werden je Reihe 20 Druckköpfe verwendet, um eine Mindestdruckbreite von mehr als der Werkstückbreite von 1.350 mm zu erzielen.

In einer alternativen Ausführungsform werden drei Reihen mit jeweils 20 Druckköpfen Xaar 1003 hintereinander in Durchlaufrichtung verwendet. Dadurch kann die Druckstation bei einer Vorschubgeschwindigkeit des Werkstückes 1 von 25 m/min an derselben räumlichen Stelle aus den drei Druckkopfreihen jeweils ein Tröpfchen pro Stelle abgeben, die wie oben beschrieben in die flüssige Grundschicht eindringen, übereinander aushärten, und eine Gesamthöhe von 3xD (Durchmesser je Tröpfchen) erzielen.

In allen oben genannten Ausführungsformen wird das Werkstück 1 mit der oben genannten Geschwindigkeit von 25 m/min. durch die Druckstation transportiert (vgl. Figur 4). Dabei werden mindestens ein Tröpfchen 3 an einem räumlichen Ort - oder, wie oben alternativ gezeigt, eine Anzahl n Tröpfchen 3 übereinander an einem räumlichen Ort - in die flüssige Grundschicht 2 abgegeben. Durch die kontinuierliche Vorschubgeschwindigkeit und die kontinuierlich arbeitenden Druckköpfe über die gesamte Werkstückbreite kann so ein nach einer digitalen Vorlage erstelltes "Strukturbild" auf dem Werkstück 1 erzeugt werden. D.h., das beispielsweise an mehreren Stellen in Vorschubrichtung linear hintereinander jeweils drei Tröpfchen 3 übereinander platziert werden, und somit ein gerader "Strich" als Vertiefung mit einer Tiefe h = 3xD entsteht. Alternativ sind alle Strukturen möglich, die in einer digitalen Vorlage erstellt wurden.

In der darauf folgenden UV-Station wird daher die flüssige Grundschicht 2 mittels UV-LED-Strahlern ausgehärtet, während die Tröpfchen 3 bereits vorher erstarrt sind.

In einem weiteren Verfahrensschritt werden die erstarrten Tröpfchen 3 mit einer Bürste ausgebürstet.

In einer alternativen Ausführungsform werden die erstarrten Tröpfchen 3 in einem Heißluftkanal mit einer Düsentemperatur von 125 °C wieder verflüssigt, und danach abgesaugt.

In einer weiteren alternativen Ausführungsform werden die erstarrten Tröpfchen 3 durch den Auftrag eines Lösemittels wieder angelöst, und durch eine anschließende Absaugung des Lösemittels entfernt. In einer besonders bevorzugten Ausführungsform sind die Tröpfchen 3 aus einem wasserlöslichen Material, so das als Lösungsmittel im Wesentlichen Wasser zum Einsatz kommt.

Ausführungsbeispiel 4:

In einer alternativen Ausführungsform kann die Zusammensetzung der Tröpfchen 3 wie folgt gewählt werden:

- Paraffin / Wachs: 19%
- EVA: 10%
- Polyamidharz: 29%
- Niedrigmolekularer Alkohol: 39%
- Additive (zur Entgasung): 3%

In dieser Ausführungsform werden die Tröpfchen 3 nach dem Erstarren und Fixieren der flüssigen Grundschicht 2 mit mechanischen Mitteln entfernt, oder alternativ durch die Erwärmung im Heißluftofen wieder verflüssigt und danach mit mechanischen Mitteln und/oder Absaugung aus der Grundschicht 2 entfernt.

Ausführungsbeispiel 5:

In dieser Ausführungsform werden die Tröpfchen 3 vor dem Auftragen der flüssigen Grundschicht 2 aufgebracht.

Es wird ein Werkstück 1 in Form einer HDF-Platte mit einer Dichte von 850 kg/m$^3$ in den Abmessungen 8 mm Dicke, 2450 mm Länge, und 1550 mm Breite einer digitalen Druckstation zugeführt. Die HDF-Platte ist vorher mit einer oder mehreren Lackier- oder Grundierschritten vorbereitet, und anschließend digital mit einem dekorativen Bild einer Holznachbildung (beispielsweise Buchenparkett Dreistab) bedruckt worden. Alternativ kann nach diesem Bedrucken auch noch eine Zwischenlackschicht aufgebracht werden.

In der digitalen Druckstation werden eine Vielzahl von Tröpfchen 3 mit einem Volumen zwischen 12 pL und 40 pL auf die vorher dekorativ bedruckte Oberfläche aufgedruckt, und zwar nach einer digitalen Vorlage. Dabei werden zwischen mindestens 100 bis zu 10.000 Tröpfchen je cm$^2$ Fläche aufgebracht. Diese Tröpfchen 3 bestehen aus einer Paraffin-Mischung, welche bei einer Temperatur von 80 Grad Celsius aufgedruckt wird, und bei Kontakt mit der Oberfläche innerhalb von weniger als drei Sekunden, bevorzugt weniger als einer Sekunde erstarren.

In einer alternativen Ausführungsform werden die Tröpfchen 3 nach einer digitalen Vorlage aufgebracht, welche aus dem digitalen Bild der zuvor aufgedruckten dekorativen Oberfläche mittels digitaler Bearbeitungsmethoden entstanden ist. Dadurch kann erreicht werden, dass die Tröpfchen 3 beispielsweise genau dort aufgedruckt werden, wo das Dekorbild des Buchenparketts ein Astloch hat, so dass die später mit dem erfindungsgemäßen Verfahren erzeugten Strukturen synchron zu dem darunterliegenden Dekorbild sind. Es können auch mehrere Tröpfchen 3 an einer räumlichen Stelle übereinander angeordnet werden, so dass die gesamte Höhendifferenz zwischen der Oberfläche des Werkstückes 1 und dem höchsten Punkt der aufgebrachten Tröpfchen h = n x D erreicht, mit h: Höhendifferenz, n: Anzahl Tröpfchen übereinander und D = Durchmesser eines Tröpfchens 3.

In einer beispielhaften Ausführungsform ergibt sich für n = 5 Tröpfchen 3 und einen Durchmesser je Tröpfchen von D = 25 µm eine Höhe h = 125 µm. Von diesen so gebildeten "Türme" aus übereinander liegenden Tröpfchen 3 werden gemäß der digitalen Vorlagen eine Vielzahl nebeneinander, längs oder quer zur Vorschubrichtung aufgebracht, so dass sich eine Struktur aus einer Vielzahl von Tröpfchenkette und einzelnen Tröpfchenansammlungen auf dem Werkstück 1 ergeben. Dabei kann die Höhe der einzelen "Türme" unterschiedlich sein, und zwar sowohl durch Variation der Anzahl der Tröpfchen 3 übereinander, als auch durch Variation des Tröpfchenvolumens und damit der Tröpfchendurchmesser D.

Anschließend wird eine flüssige Grundschicht 2 aus einem UV-härtenden Acrylat-Material nach dem Stand der Technik aufgebracht, und zwar mit einer Schichtstärke von 120 µm. Die flüssige Grundschicht 2 wird mit Hilfe einer Gießmaschine aufgebracht, bei der ein flüssiger Vorhang durch eine Schöpfwalze und eine Gießlippe erzeugt wird (vgl. 103 in Figur 6). Die Schichtstärke kann durch die Viskosität des Materials der flüssigen Grundschicht (hier UV-härtender Acrylatlack nach dem Stand der Technik), durch die Drehzahl der Schöpfwalze der Gießmaschine sowie durch die Vorschubgeschwindigkeit des Werkstückes 1 (hier HDF-Platte) beeinflusst und gesteuert werden.

In der darauf folgenden UV-Station wird die flüssige Grundschicht 2 mittels UV-LED-Strahlern ausgehärtet.

Nach dem Erstarren und Fixieren der flüssigen Grundschicht werden die Tröpfchen 3 mit mechanischen Mitteln entfernt, oder alternativ durch die Erwärmung im Heißluftofen wieder verflüssigt und danach mit mechanischen Mitteln und/oder Absaugung entfernt.

In einer alternativen Ausführungsform werden die noch flüssigen Tröpfchen 3 durch den Auftrag eines Lösemittels und anschließende Absaugung des Lösemittels entfernt.

In einer weiteren alternativen Ausführungsform ist das Material der Tröpfchen 3 so gewählt, dass es bei Bestrahlung mit UV-Strahlung beginnt zu schrumpfen. Damit verlieren die Tröpfchen 3 nach dem Fixieren der flüssigen Grundschicht 2 den Kontakt mit dieser, und können mit einfachen Mitteln abgesaugt werden.

Nachfolgend werden Aspekte der Erfindung erläutert. Diese wirken nicht beschränkend auf die Erfindung sondern stellen lediglich bevorzugte Ausprägungsformen der Erfindung dar.

Gemäß einem ersten Aspekt ist ein Verfahren zum Herstellen einer Struktur auf einer Oberfläche eines Werkstückes 1 vorgesehen, wobei das Verfahren folgende Schritte aufweist:

- Aufbringen einer flüssigen Grundschicht 2 auf die Oberfläche des Werkstückes 1;
- Aufspritzen mindestens eines Tröpfchens 3 in die noch nicht erstarrte Grundschicht 2, wobei das mindestens eine Tröpfchen 3 in die Grundschicht 2 zumindest teilweise, vorzugsweise vollständig, eindringt;
- Fixieren der Grundschicht 2;
- mindestens teilweises Entfernen des mindestens einen Tröpfchens 3.

Gemäß einem zweiten Aspekt, der mit dem ersten Aspekt kombiniert werden kann oder für sich allein steht, ist ein Verfahren zum Herstellen einer Struktur auf einer Oberfläche eines Werkstückes 1 vorgesehen, wobei das Verfahren folgende Schritte aufweist:

- Aufspritzen mindestens eines Tröpfchens 3 auf die Oberfläche des Werkstückes 1;
- Aufbringen einer flüssigen Grundschicht 2 auf die Oberfläche des Werkstückes 1, wobei die Grundschicht 2 das mindestens eine Tröpfchen 3 umfließt, vorzugsweise zumindest teilweise bedeckt;
- Fixieren der Grundschicht 2;
- mindestens teilweises Entfernen des mindestens einen Tröpfchens 3.

Gemäß einem dritten Aspekt ist ein Verfahren nach dem ersten oder zweiten Aspekt vorgesehen, wobei

das mindestens eine Tröpfchen 3 bei Kontakt mit dem Werkstück 1 und/oder mit der Grundschicht 2 erstarrt beziehungsweise einen festen Aggregatszustand annimmt und/oder wobei
das mindestens eine Tröpfchen 3 in einem separaten Schritt oder zusammen mit der Grundschicht 2 fixiert wird.

Gemäß einem vierten Aspekt ist ein Verfahren nach dem ersten, zweiten oder dritten Aspekt vorgesehen, wobei
durch das Aufspritzen des mindestens einen Tröpfchens 3 in die zuvor aufgetragene, flüssige Grundschicht 2 mindestens eine Vertiefung eingebracht wird, wobei die mindestens eine Vertiefung vorzugsweise durch das mindestens eine Tröpfchen 3 vollständig ausgefüllt wird, und/oder wobei sich die Schichtstärke der Grundschicht 2 an der Stelle, an der das mindestens eine Tröpfchen 3 aufgespritzt wurde, verändert.

Gemäß einem fünften Aspekt ist ein Verfahren nach dem ersten, zweiten, dritten oder vierten Aspekt vorgesehen, wobei
mehrere Tröpfchen 3 am selben räumlichen Ort in der flüssigen Grundschicht 2 und/oder auf dem Werkstück 1 übereinander platziert werden, so dass sich vor dem Aufbringen und/oder vor dem Fixieren der Grundschicht 2 ein zusammengesetztes Tröpfchen 3 ergibt.

Gemäß einem sechsten Aspekt ist ein Verfahren nach einem der vorstehenden Aspekte und insbesondere nach dem ersten, dritten, vierten oder fünften Aspekt vorgesehen, wobei
vor dem Aufspritzen des mindestens einen Tröpfchens 3 ein weiterer Bearbeitungsschritt erfolgt, in dem eine Verfestigung der Grundschicht 2 insoweit erfolgt, dass die Grundschicht 2 eine höhere Viskosität als bei ihrem Auftrag auf das Werkstück 1 aufweist, jedoch noch nicht erstarrt ist.

Gemäß einem siebten Aspekt ist ein Verfahren nach dem ersten, zweiten, dritten, vierten, fünften oder sechsten Aspekt vorgesehen, wobei
das mindestens eine Tröpfchen 3 mit einer Temperatur von > 40 °C, bevorzugt > 60 °C, besonders bevorzugt > 90 °C, aufgespritzt wird und die flüssige Grundschicht 2 und/oder das Werkstück 1 eine Temperatur von < 40 °C, bevorzugt < 35°C, besonders bevorzugt < 30°C, aufweist.

Gemäß einem achten Aspekt ist ein Verfahren nach dem dritten, vierten, fünften, sechsten oder siebten Aspekt vorgesehen, wobei
das Erstarren des mindestens einen Tröpfchens 3 bei Kontakt mit der Grundschicht 2 und/oder mit dem Werkstück 1 innerhalb von weniger als 8 Sekunden, bevorzugt innerhalb von weniger als 3 Sekunden, besonders bevorzugt innerhalb von weniger als 0,5 Sekunden, erfolgt.

Gemäß einem neunten Aspekt ist ein Verfahren nach dem ersten, zweiten, dritten, vierten, fünften, sechsten, siebten oder achten Aspekt vorgesehen, wobei

das mindestens teilweise Entfernen des mindestens einen Tröpfchens 3 mittels mechanischer, und/oder chemischer und/oder physikalischer Methoden erfolgt, wobei optional auch Material der Grundschicht 2 entfernt wird, und/oder wobei
das mindestens eine Tröpfchen 3 mittels eines Lösemittels nach der Fixierung der Grundschicht 2 wieder verflüssigt wird.

Gemäß einem zehnten Aspekt ist ein Verfahren nach dem dritten, vierten, fünften, sechsten, siebten, achten oder neunten Aspekt vorgesehen, wobei
das mindestens eine erstarrte Tröpfchen 3 vor und/oder während des mindestens teilweisen Entfernens durch Wiedererwärmen zumindest teilweise verflüssigt wird, und so aus bzw. von der Grundschicht 2 entfernt wird.

Gemäß einem elften Aspekt ist ein Verfahren nach dem ersten, zweiten, dritten, vierten, fünften, sechsten, siebten, achten, neunten oder zehnten Aspekt vorgesehen, wobei

das mindestens eine Tröpfchen 3 aus einem Material, vorzugsweise aus einem Acrylatgemisch, besteht, welches nicht durch UV-Strahlung zur Aushärtung, insbesondere zur Polymerisation, angeregt werden kann, und/oder wobei

die flüssige Grundschicht 2 das mindestens eine Tröpfchen 3 derart umschließt, dass eine Öffnung in der Grundschicht 2 verbleibt, die eine geringere Fläche aufweist, als eine Projektion des mindestens einen Tröpfchens 3 senkrecht nach oben, oder dass die flüssige Grundschicht 2 das mindestens eine Tröpfchen 3 vollständig umschließt, und/oder wobei

das mindestens teilweise Entfernen des mindestens einen Tröpfchens 3 durch ein erstes mechanisches Abtragen, vorzugsweise von 1 bis 50 $\mu$m, besonders bevorzugt von 5 bis 10 $\mu$m, der gehärteten Grundschicht 2, vorzugsweise mittels einer Schleifvorrichtung, optional gefolgt von einem mechanischen Ausbürsten des so freigelegten mindestens einen Tröpfchens 3, und/oder von einem thermischen Aufheizen und Absaugen des mindestens einen dann wieder verflüssigten Tröpfchens 3 durchgeführt wird, und/oder wobei

die Grundschicht 2 derart fixiert wird, dass nach dem Fixieren der Grundschicht 2 die Oberfläche der fixierten Grundschicht 2 durch das mindestens eine in der Grundschicht 2 verbliebene Tröpfchen 3 keine größeren Unebenheiten als max. 20 $\mu$m hat, und/oder wobei

die Grundschicht 2 derart fixiert wird, dass ein Bereich, der das mindestens eine Tröpfchen 3 aufweist, gegenüber einem Bereich ohne aufgebrachte Tröpfchen 3 einen unterschiedlichen Härtegrad, vorzugsweise von mindestens einem Faktor 2, aufweist, und/oder wobei

das mindestens eine Tröpfchen 3 nach der Aushärtung bzw. Fixierung in der Grundschicht 2 einen anderen Glanzgrad als die fixierte Grundschicht 2 aufweist.

Gemäß einem zwölften Aspekt ist ein Verfahren nach dem dritten, vierten, fünften, sechsten, siebten, achten, neunten, zehnten oder elften Aspekt vorgesehen, wobei

das mindestens eine erstarrte bzw. gehärtete Tröpfchen 3 verglichen mit der gehärteten bzw. fixierten Grundschicht 2 elastischer bzw. weicher ist, und/oder wobei

das mindestens eine Tröpfchen 3 während es erstarrt bzw. fixiert wird, eine Volumenverringerung erfährt.

Gemäß einem dreizehnten Aspekt ist ein Verfahren nach dem ersten, zweiten, dritten, vierten, fünften, sechsten, siebten, achten, neunten, zehnten, elften oder zwölften Aspekt vorgesehen, wobei

das Verfahren zumindest sämtliche Schritte gemäß des ersten und zweiten Aspekts aufweist.

Gemäß einem vierzehnten Aspekt ist eine Vorrichtung zum Herstellen einer Struktur auf einer Oberfläche eines Werkstückes 1 vorgesehen, wobei die Vorrichtung Folgendes aufweist:

- eine Aufbringungseinheit 100, die dazu ausgebildet ist, eine flüssige Grundschicht 2 auf eine Oberfläche des Werkstückes 1 aufzubringen;
- eine Abgabeeinheit 200, die dazu ausgebildet ist, mindestens ein Tröpfchen 3 in die noch nicht erstarrte Grundschicht 2 und/oder auf die Oberfläche des Werkstückes 1 aufzuspritzen;
- eine Fixierungseinheit 300, die dazu ausgebildet ist, die flüssige Grundschicht 2 zu fixieren;
- eine Bearbeitungseinheit, die dazu ausgebildet ist, das mindestens eine Tröpfchen 3 mindestens teilweise zu entfernen;
- eine Steuereinheit 600, die dazu ausgebildet ist, die Vorrichtung entsprechend dem Verfahren nach einem der vorstehenden dreizehn Aspekte zu steuern.

Gemäß einem fünfzehnten Aspekt ist eine Vorrichtung nach dem vierzehnten Aspekt vorgesehen, wobei

die Vorrichtung eine Transporteinheit 500 aufweist, die dazu ausgebildet ist, das Werkstück 1 der Aufbringungseinheit 100, der Abgabeeinheit 200, der Fixierungseinheit 300 und der Bearbeitungseinheit zuzuführen, wobei die Transporteinheit 500 vorzugsweise ein Transportband aufweist, und/oder wobei

die Aufbringungseinheit 100 eine Auftragswalze 101, einen Digitaldruckkopf und/oder einen Digitaldüsenbalken aufweist, und/oder

die Abgabeeinheit 200 einen Digitaldruckkopf 201 und/oder einen Digitaldüsenbalken aufweist, und/oder

die Fixierungseinheit 300 eine UV-Lichtquelle 301, eine Wärmequelle und/oder eine Strömungsquelle aufweist, und/oder

die Bearbeitungseinheit eine Bürste 401, eine Absaugvorrichtung, eine Abtragungsvorrichtung, eine Vorrichtung zur Abgabe einer Substanz auf die Grundschicht 2 und/oder die Tröpfchen 3, die zur chemischen Reaktion mit der Grundschicht 2 und/oder mit den Tröpfchen 3 ausgebildet ist, und/oder eine Wärmequelle aufweist.

BEZUGSZEICHENLISTE

1    Werkstück
2    Grundschicht
3    Tröpfchen
100    Aufbringungseinheit
101    Auftragswalze
102    Gegendruckwalze
103    Gießmaschine
200    Abgabeeinheit
201    Digitaldruckkopf
300    Fixierungseinheit
301    UV-Lichtquelle
400    Einheit
401    Bürste
402    Wärmequelle
403    Absaugvorrichtung
410    Einheit
411    Schleifband
420    Einheit
421    Bürste
450    Einheit
500    Transporteinheit
600    Steuereinheit

**Patentansprüche**

1.    Verfahren zum Herstellen einer Struktur auf einer Oberfläche eines Werkstückes (1) mit folgenden Schritten:

- Aufbringen einer flüssigen Grundschicht (2) auf die Oberfläche des Werkstückes (1);
- Aufspritzen mindestens eines Tröpfchens (3) in die noch nicht erstarrte Grundschicht (2), wobei das mindestens eine Tröpfchen (3) in die Grundschicht (2) zumindest teilweise, vorzugsweise vollständig, eindringt;
- Fixieren der Grundschicht (2);
- mindestens teilweises Entfernen des mindestens einen Tröpfchens (3).

2.    Verfahren nach Anspruch 1 mit folgenden Schritten:

- Aufspritzen mindestens eines weiteren Tröpfchens (3) auf die Oberfläche des Werkstückes (1);
- Aufbringen einer flüssigen Grundschicht (2) auf die Oberfläche des Werkstückes (1), wobei die Grundschicht (2) das mindestens eine weitere Tröpfchen (3) umfließt, vorzugsweise zumindest teilweise bedeckt;
- mindestens teilweises Entfernen des mindestens einen weiteren Tröpfchens (3).

3.    Verfahren nach Anspruch 1 oder 2, wobei

das mindestens eine Tröpfchen (3) bei Kontakt mit dem Werkstück (1) und/oder mit der Grundschicht (2) erstarrt beziehungsweise einen festen Aggregatszustand annimmt und/oder wobei das mindestens eine Tröpfchen (3) in einem separaten Schritt oder zusammen mit der Grundschicht (2) fixiert wird.

4.    Verfahren nach einem der vorstehenden Ansprüche, wobei

durch das Aufspritzen des mindestens einen Tröpfchens (3) in die zuvor aufgetragene, flüssige Grundschicht (2) mindestens eine Vertiefung eingebracht wird, wobei die mindestens eine Vertiefung vorzugsweise durch das mindestens eine Tröpfchen (3) vollständig ausgefüllt wird, und/oder wobei sich die Schichtstärke der Grundschicht (2) an der Stelle, an der das mindestens eine Tröpfchen (3) aufgespritzt wurde, verändert.

5.    Verfahren nach einem der oben genannten Ansprüche, wobei mehrere Tröpfchen (3) am selben räumlichen Ort in der flüssigen Grundschicht (2) und/oder auf dem Werkstück (1) übereinander platziert werden, so dass sich vor dem Aufbringen und/oder vor dem Fixieren der Grundschicht (2) ein zusammengesetztes Tröpfchen (3) ergibt.

6.    Verfahren nach einem der vorstehenden Ansprüche, wobei

vor dem Aufspritzen des mindestens einen Tröpfchens (3) ein weiterer Bearbeitungsschritt erfolgt, in dem eine Verfestigung der Grundschicht (2) insoweit erfolgt, dass die Grundschicht (2) eine höhere Viskosität als bei ihrem Auftrag auf das Werkstück (1) aufweist, jedoch noch nicht erstarrt ist.

7.    Verfahren nach einem der Ansprüche 3 bis 6, wobei das Erstarren des mindestens einen Tröpfchens (3) bei Kontakt mit der Grundschicht (2) und/oder mit dem Werkstück (1) innerhalb von weniger als 8 Sekunden, bevorzugt innerhalb von weniger als 3 Sekunden, besonders bevorzugt innerhalb von weniger als 0,5 Sekunden, erfolgt.

8.    Verfahren nach einem der oben genannten Ansprüche, wobei

das mindestens teilweise Entfernen des mindestens einen Tröpfchens (3) mittels mechanischer, und/oder chemischer und/oder physikalischer Methoden erfolgt, wobei optional auch Material der Grundschicht (2) entfernt wird, und/oder wobei
das mindestens eine Tröpfchen (3) mittels eines Lösemittels nach der Fixierung der Grundschicht (2) wieder verflüssigt wird.

9.    Verfahren nach einem der Ansprüche 3 bis 8, wobei das mindestens eine erstarrte Tröpfchen (3) vor und/oder während des mindestens teilweisen Entfernens durch Wiedererwärmen zumindest teilweise verflüssigt wird, und so aus bzw. von der Grundschicht (2) entfernt wird.

10. Verfahren nach einem der oben genannten Ansprüche, wobei

die flüssige Grundschicht (2) das mindestens eine Tröpfchen (3) derart umschließt, dass eine Öffnung in der Grundschicht (2) verbleibt, die eine geringere Fläche aufweist, als eine Projektion des mindestens einen Tröpfchens (3) senkrecht nach oben, oder dass die flüssige Grundschicht (2) das mindestens eine Tröpfchen (3) vollständig umschließt.

11. Verfahren nach einem der oben genannten Ansprüche, wobei

das mindestens teilweise Entfernen des mindestens einen Tröpfchens (3) durch ein erstes mechanisches Abtragen, vorzugsweise von 1 bis 50 $\mu$m, besonders bevorzugt von 5 bis 10 $\mu$m, der gehärteten Grundschicht (2), vorzugsweise mittels einer Schleifvorrichtung, optional gefolgt von einem mechanischen Ausbürsten des so freigelegten mindestens einen Tröpfchens (3) erfolgt.

12. Verfahren nach einem der oben genannten Ansprüche, wobei

das mindestens teilweise Entfernen des mindestens einen Tröpfchens (3) durch ein thermisches Aufheizen und Absaugen des mindestens einen dann wieder verflüssigten Tröpfchens erfolgt, und/oder wobei

das mindestens eine Tröpfchen (3) aus einem Material, vorzugsweise aus einem Acrylatgemisch, besteht, welches nicht durch UV-Strahlung zur Aushärtung, insbesondere zur Polymerisation, angeregt werden kann, und/oder wobei die Grundschicht (2) derart fixiert wird, dass nach dem Fixieren der Grundschicht (2) die Oberfläche der fixierten Grundschicht (2) durch das mindestens eine in der Grundschicht (2) verbliebene Tröpfchen (3) keine größeren Unebenheiten als max. 20 $\mu$m hat, und/oder wobei die Grundschicht (2) derart fixiert wird, dass ein Bereich, der das mindestens eine Tröpfchen (3) aufweist, gegenüber einem Bereich ohne aufgebrachte Tröpfchen (3) einen unterschiedlichen Härtegrad, vorzugsweise von mindestens einem Faktor 2, aufweist, und/oder wobei das mindestens eine Tröpfchen (3) nach der Aushärtung bzw. Fixierung in der Grundschicht (2) einen anderen Glanzgrad als die fixierte Grundschicht (2) aufweist.

13. Verfahren nach einem der Ansprüche 3 bis 12, wobei

das mindestens eine erstarrte bzw. gehärtete Tröpfchen (3) verglichen mit der gehärteten bzw. fixierten Grundschicht (2) elastischer bzw. weicher ist, und/oder wobei

das mindestens eine Tröpfchen (3) während es erstarrt bzw. fixiert wird, eine Volumenverringerung erfährt.

14. Vorrichtung zum Herstellen einer Struktur auf einer Oberfläche eines Werkstückes (1), aufweisend:

- eine Aufbringungseinheit (100), die dazu ausgebildet ist, eine flüssige Grundschicht (2) auf eine Oberfläche des Werkstückes (1) aufzubringen;
- eine Abgabeeinheit (200), die dazu ausgebildet ist, mindestens ein Tröpfchen (3) in die noch nicht erstarrte Grundschicht (2) aufzuspritzen;
- eine Fixierungseinheit (300), die dazu ausgebildet ist, die flüssige Grundschicht (2) zu fixieren;
- eine Bearbeitungseinheit, die dazu ausgebildet ist, das mindestens eine Tröpfchen (3) mindestens teilweise zu entfernen;
- eine Steuereinheit (600), die dazu ausgebildet ist, die Vorrichtung entsprechend dem Verfahren nach einem der Ansprüche 1 bis 13 zu steuern.

15. Vorrichtung nach Anspruch 14, wobei

die Vorrichtung eine Transporteinheit (500) aufweist, die dazu ausgebildet ist, das Werkstück (1) der Aufbringungseinheit (100), der Abgabeeinheit (200), der Fixierungseinheit (300) und der Bearbeitungseinheit zuzuführen, wobei die Transporteinheit (500) vorzugsweise ein Transportband aufweist, und/oder wobei die Aufbringungseinheit (100) eine Auftragswalze (101), einen Digitaldruckkopf und/oder einen Digitaldüsenbalken aufweist, und/oder die Abgabeeinheit (200) einen Digitaldruckkopf (201) und/oder einen Digitaldüsenbalken aufweist, und/oder die Fixierungseinheit (300) eine UV-Lichtquelle (301), eine Wärmequelle und/oder eine Strömungsquelle aufweist, und/oder die Bearbeitungseinheit eine Bürste (401), eine Absaugvorrichtung, eine Abtragungsvorrichtung, eine Vorrichtung zur Abgabe einer Substanz auf die Grundschicht (2) und/oder die Tröpfchen (3), die zur chemischen Reaktion mit der Grundschicht (2) und/oder mit den Tröpfchen (3) ausgebildet ist, und/oder eine Wärmequelle aufweist, und/oder wobei die Abgabeeinheit (200) dazu ausgebildet ist, mindestens ein Tröpfchen (3) auf die Oberfläche des Werkstückes (1) aufzuspritzen.

Figur 1

I

II

III

IR 402

Figur 2

Figur 3a

Figur 3b

Figur 4

EP 4 215 282 A1

Figur 5

Figur 6

Europäisches Patentamt
European Patent Office
Office européen des brevets

# EUROPÄISCHER RECHERCHENBERICHT

Nummer der Anmeldung

EP 23 16 0613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2010/070485 A2 (FLOORING IND LTD SARL [LU]; SCHACHT BENNY [BE]; TACK FILIP [BE]) 24. Juni 2010 (2010-06-24) * Seite 2, Zeile 1 – Zeile 18 * * Seite 23, Zeile 5 – Zeile 15; Abbildungen 10,11 * * Seite 25, Zeile 8 – Zeile 18; Abbildung 16 * ----- | 1,14 | INV. B05D3/12 B05D1/42 B05D5/02 B05D3/04 A46B5/06 B24B7/18 B24B29/00 B44C1/22 B44D5/00 B05D1/32 B08B3/02 B08B5/02 |
| X | EP 3 415 316 A1 (HYMMEN GMBH MASCHINEN UND ANLAGENBAU [DE]) 19. Dezember 2018 (2018-12-19) * Ansprüche 1,2,3,7,8,12; Abbildungen; Beispiele * ----- | 1,3-12, 14,15 | |
| X | WO 2018/069874 A1 (MACOR GIORGIO [IT]) 19. April 2018 (2018-04-19) * Seite 11, Zeile 26 – Seite 13, Zeile 24; Beispiele * * Ansprüche 1,6,8,9,11,23 * ----- | 1,3-15 | ADD. B05D3/00 B24C1/04 B24C3/08 |
| X | EP 2 174 772 A1 (COMMISSARIAT ENERGIE ATOMIQUE [FR]) 14. April 2010 (2010-04-14) * Absätze [0016], [0019], [0022] * * Absätze [0027], [0028]; Beispiel 1 * * Ansprüche 1,2,4,5,7,8,9; Abbildungen * ----- | 1,3-15 | RECHERCHIERTE SACHGEBIETE (IPC) B05D B24C |
| X | FR 2 936 965 A1 (COMMISSARIAT ENERGIE ATOMIQUE [FR]; SOFILET [FR]) 16. April 2010 (2010-04-16) * Ansprüche 1,4,7,8; Abbildungen * ----- -/-- | 1,4,8, 14,15 | |

Der vorliegende Recherchenbericht wurde für alle Patentansprüche erstellt

| Recherchenort | Abschlußdatum der Recherche | Prüfer |
|---|---|---|
| Den Haag | 14. Juni 2023 | Slembrouck, Igor |

**EUROPÄISCHER RECHERCHENBERICHT**

Europäisches Patentamt
European Patent Office
Office européen des brevets

Nummer der Anmeldung

EP 23 16 0613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | WO 2020/039361 A1 (MACOR GIORGIO [IT]) 27. Februar 2020 (2020-02-27) * Seite 31, Zeile 4 – Seite 32, Zeile 3; Beispiel 1 * * Seite 34, Zeile 24 – Seite 38, Zeile 22; Beispiele 5-7 * * Ansprüche 1,4,13,14,15,22; Abbildungen 1,2 * ----- | 1,3,4,8, 12,14,15 | B24C9/00 B05D3/06 B08B1/00 B08B1/02 B08B7/00 B08B15/04 |
| A | FR 2 946 959 A1 (OREAL [FR]) 24. Dezember 2010 (2010-12-24) * Seite 12, Zeile 8 – Zeile 14 * * Seite 12, Zeile 24 – Zeile 27 * * Ansprüche 1,5,7,9,11,14; Abbildungen 3,6 * ----- | 2 | |
| A | US 6 120 845 A (PEASE SCOTT NORTON [US]) 19. September 2000 (2000-09-19) * Anspruch 1; Abbildungen * ----- | 2 | |
| A | US 6 150 009 A (STECKER WILLIAM M [US]) 21. November 2000 (2000-11-21) * Ansprüche; Abbildungen; Beispiele * ----- | 2 | RECHERCHIERTE SACHGEBIETE (IPC) |
| A | JP 2010 069684 A (SHUHO KK) 2. April 2010 (2010-04-02) * Absätze [0024], [0025]; Abbildung 8 * * Ansprüche * ----- | 2,14 | |
| A | US 2016/009932 A1 (JANG SEON HO [KR] ET AL) 14. Januar 2016 (2016-01-14) * Ansprüche; Abbildungen; Beispiele * ----- | 2,14 | |

Der vorliegende Recherchenbericht wurde für alle Patentansprüche erstellt

| Recherchenort | Abschlußdatum der Recherche | Prüfer |
|---|---|---|
| Den Haag | 14. Juni 2023 | Slembrouck, Igor |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

Seite 2 von 2

**ANHANG ZUM EUROPÄISCHEN RECHERCHENBERICHT
ÜBER DIE EUROPÄISCHE PATENTANMELDUNG NR.**

`EP 23 16 0613`

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

`14-06-2023`

| Im Recherchenbericht angeführtes Patentdokument | Datum der Veröffentlichung | Mitglied(er) der Patentfamilie | | Datum der Veröffentlichung |
|---|---|---|---|---|
| WO 2010070485 A2 | 24-06-2010 | CN | 102256806 A | 23-11-2011 |
| | | EP | 2373494 A2 | 12-10-2011 |
| | | EP | 3381710 A1 | 03-10-2018 |
| | | EP | 3640041 A1 | 22-04-2020 |
| | | EP | 3640042 A1 | 22-04-2020 |
| | | ES | 2905800 T3 | 12-04-2022 |
| | | ES | 2928330 T3 | 17-11-2022 |
| | | HU | E057797 T2 | 28-06-2022 |
| | | KR | 20110096161 A | 29-08-2011 |
| | | KR | 20110116013 A | 24-10-2011 |
| | | PL | 2373494 T3 | 31-01-2019 |
| | | PL | 3381710 T3 | 04-04-2022 |
| | | PL | 3640041 T3 | 05-12-2022 |
| | | PT | 3381710 T | 26-01-2022 |
| | | US | 2012015107 A1 | 19-01-2012 |
| | | US | 2016114619 A1 | 28-04-2016 |
| | | US | 2021221166 A1 | 22-07-2021 |
| | | US | 2021221167 A1 | 22-07-2021 |
| | | US | 2021229488 A1 | 29-07-2021 |
| | | US | 2022055399 A1 | 24-02-2022 |
| | | WO | 2010070485 A2 | 24-06-2010 |
| EP 3415316 A1 | 19-12-2018 | CN | 110267813 A | 20-09-2019 |
| | | CN | 110290925 A | 27-09-2019 |
| | | CN | 113212020 A | 06-08-2021 |
| | | DE | 202018006283 U1 | 22-01-2020 |
| | | EP | 3415316 A1 | 19-12-2018 |
| | | EP | 3415319 A1 | 19-12-2018 |
| | | EP | 3666525 A1 | 17-06-2020 |
| | | ES | 2781801 T3 | 07-09-2020 |
| | | ES | 2786985 T3 | 14-10-2020 |
| | | ES | 2787041 T3 | 14-10-2020 |
| | | ES | 2802801 T3 | 21-01-2021 |
| | | HU | E050387 T2 | 30-11-2020 |
| | | PL | 3415316 T3 | 05-10-2020 |
| | | PL | 3415319 T3 | 13-07-2020 |
| | | PT | 3415316 T | 06-05-2020 |
| | | US | 2020016627 A1 | 16-01-2020 |
| | | US | 2020016629 A1 | 16-01-2020 |
| | | US | 2020023662 A1 | 23-01-2020 |
| | | US | 2020368777 A1 | 26-11-2020 |
| | | US | 2021268542 A1 | 02-09-2021 |
| | | US | 2021394232 A1 | 23-12-2021 |
| | | US | 2022379343 A1 | 01-12-2022 |
| | | US | 2022379344 A1 | 01-12-2022 |
| | | WO | 2018229164 A1 | 20-12-2018 |

Für nähere Einzelheiten zu diesem Anhang : siehe Amtsblatt des Europäischen Patentamts, Nr.12/82

EPO FORM P0461

`Seite 1 von 2`

**ANHANG ZUM EUROPÄISCHEN RECHERCHENBERICHT
ÜBER DIE EUROPÄISCHE PATENTANMELDUNG NR.**

EP 23 16 0613

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2023

| Im Recherchenbericht angeführtes Patentdokument | Datum der Veröffentlichung | Mitglied(er) der Patentfamilie | Datum der Veröffentlichung |
|---|---|---|---|
| | | WO 2018229167 A1 | 20-12-2018 |
| | | WO 2018229169 A1 | 20-12-2018 |
| | | WO 2018229170 A1 | 20-12-2018 |
| WO 2018069874 A1 | 19-04-2018 | CN 110177691 A | 27-08-2019 |
| | | EP 3526043 A1 | 21-08-2019 |
| | | ES 2939883 T3 | 27-04-2023 |
| | | US 2019315087 A1 | 17-10-2019 |
| | | WO 2018069874 A1 | 19-04-2018 |
| EP 2174772 A1 | 14-04-2010 | CN 101728547 A | 09-06-2010 |
| | | EP 2174772 A1 | 14-04-2010 |
| | | ES 2383049 T3 | 15-06-2012 |
| | | FR 2937181 A1 | 16-04-2010 |
| | | JP 2010089078 A | 22-04-2010 |
| | | KR 20100040660 A | 20-04-2010 |
| | | TW 201014699 A | 16-04-2010 |
| | | US 2010092688 A1 | 15-04-2010 |
| FR 2936965 A1 | 16-04-2010 | KEINE | |
| WO 2020039361 A1 | 27-02-2020 | CN 112739463 A | 30-04-2021 |
| | | EP 3840893 A1 | 30-06-2021 |
| | | KR 20210047314 A | 29-04-2021 |
| | | US 2021187823 A1 | 24-06-2021 |
| | | WO 2020039361 A1 | 27-02-2020 |
| FR 2946959 A1 | 24-12-2010 | KEINE | |
| US 6120845 A | 19-09-2000 | KEINE | |
| US 6150009 A | 21-11-2000 | KEINE | |
| JP 2010069684 A | 02-04-2010 | JP 5294770 B2 | 18-09-2013 |
| | | JP 2010069684 A | 02-04-2010 |
| US 2016009932 A1 | 14-01-2016 | KR 20160008297 A | 22-01-2016 |
| | | US 2016009932 A1 | 14-01-2016 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007019871 A1
- DE 102009044802 A1
- DE 102015110236 A1
- DE 102017113035 A1